# EUROPÄISCHE PATENTSCHRIFT

(11) **EP 2 021 102 B1**
(45) Veröffentlichungstag und Bekanntmachung des Hinweises auf die Patenterteilung: **30.11.2011**
(21) Anmeldenummer: 07725277.3
(22) Anmeldetag: 16.05.2007
(51) Int. Cl.: B01D 53/94, B01D 53/90, F01N 3/20

(54) **VERFAHREN UND VORRICHTUNG ZUM BEREITSTELLEN EINES GASFÖRMIGEN STOFFGEMISCHES**
METHOD AND DEVICE FOR PROVIDING A GASEOUS MIXTURE
PROCÉDÉ ET DISPOSITIF POUR PRÉPARER UN MÉLANGE GAZEUX

(30) Priorität: 16.05.2006 DE 102006023146
(43) Veröffentlichungstag der Anmeldung: 11.02.2009
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); BRUGGER, Marc, 53819 Neunkirchen (DE); HÄRIG, Thomas, 43819 Neunkirchen-Seelscheid (DE); HIRTH, Peter, 51503 Rösrath (DE); KLEIN, Ulf, 53819 Neunkirchen-Seelscheid (DE)
(74) Vertreter: Rössler, Matthias
(86) Internationale Anmeldenummer: PCT/EP2007/004361
(87) Internationale Veröffentlichungsnummer: WO 2007/131787

(56) Entgegenhaltungen:
- EP-A- 1 481 719
- WO-A-2005/025725
- WO-A-2006/025110
- DE-A1- 19 845 944
- DE-U1- 20 308 348

## Beschreibung

Gegenstand der vorliegenden Erfindung ist ein Verfahren und eine Vorrichtung zum Bereitstellen eines gasförmigen Stoffgemisches, welches ein Reduktionsmittel und/oder einen Reduktionsmittelvorläufer umfasst. Das erfindungsgemäße Verfahren und die erfindungsgemäße Vorrichtung sind in vorteilhafter Weise insbesondere zur Zudosierung von Reduktionsmitteln für die Reduktion von Stickoxiden im Abgas von Verbrennungskraftmaschinen einsetzbar.

Das Abgas von Verbrennungskraftmaschinen weist Stoffe auf, deren Emission in die Umwelt unerwünscht ist. Beispielsweise dürfen in vielen Ländern Stickoxide (NOₓ) nur bis zu einem gewissen Grenzwert im Abgas von Verbrennungskraftmaschinen enthalten sein. Neben innermotorischen Maßnahmen, mit denen durch Wahl eines möglichst geeigneten Betriebspunktes der Verbrennungskraftmaschine die Emission von Stickoxiden vermindert werden kann, haben sich Nachbehandlungsmethoden etabliert, mit denen eine weitere Absenkung der Stickoxidemissionen möglich ist.

Eine Möglichkeit, die Stickoxidemissionen weiter zu reduzieren, ist die so genannte selektive katalytische Reduktion (SCR, Selective Catalytic Reduction). Hierbei erfolgt eine selektive Reduktion der Stickoxide zu molekularem Stickstoff (N₂) unter Einsatz eines Reduktionsmittels. Ein mögliches Reduktionsmittel ist Ammoniak (NH₃). Ammoniak wird dabei oft nicht in Form von Ammoniak gelagert, vielmehr wird ein Ammoniakvorläufer bevorratet, der im Bedarfsfall in Ammoniak umgesetzt wird. Mögliche Ammoniakvorläufer sind beispielsweise Harnstoff ((NH₂)₂CO), Ammoniumcarbamat, Isocyansäure (HCNO), Cyanursäure und ähnliches. Insbesondere Harnstoff hat sich als einfach zu bevorraten erwiesen. Bevorzugt wird Harnstoff in Form einer Harnstoff-Wasserlösung bevorratet. Harnstoff und insbesondere Harnstoff-Wasserlösung ist gesundheitlich unbedenklich, einfach zu verteilen und zu lagern. Unter dem Namen "AdBlue" wird eine solche Harnstoff-Wasserlösung vertrieben.

Aus der DE 199 13 462 A1 ist ein Verfahren bekannt, bei dem eine Harnstoff-Wasserlösung stromaufwärts eines Hydrolysekatalysators in einen Teilstrom eines Abgases einer Verbrennungskraftmaschine eindosiert wird. Durch Auftreffen auf den Hydrolysekatalysator erfolgt im Betrieb eine Hydro- und Thermolyse des Harnstoffs zu Ammoniak, der in einem stromabwärts gelegenen SCR-Katalysator als Reduktionsmittel zum Einsatz kommt. Das hier beschriebene Verfahren weist den Nachteil auf, dass der Hydrolysekatalysator durch die Verdampfung der Harnstoff Wasserlösung abgekühlt wird. Insbesondere dann, wenn große Mengen Ammoniak benötigt werden, kann es so zumindest in Bereichen des Hydrolysekatalysators zu einer so starken Abkühlung kommen, dass hier die Hydrolysereaktion nicht mehr oder nicht mehr vollständig abläuft.

Die EP 1 481 719 A1 betrifft ein Abgasbehandlungssystem, welchem Reduktionsmittel zugeführt werden kann. Darüber hinaus ist ein Ammoniakgenerator beschrieben, welcher zugeführte Reduktionsmitteltropfen durch Wärme des Abgases oder durch einen Heizer in Ammoniak umwandelt. Der Ammoniakgenerator ist dabei von Abgas durchströmt.

Die WO 2005/025 725 A1 betrifft eine Vorrichtung zur Aufbereitung einer Reduktionsmittelvorläuferlösung, welche ein steuerbares Heizelement aufweist.

Die WO 2006/025 110 A1 betrifft ein Abgasreinigungssystem welches eine Zufuhr für eine flüssige Harnstofflösung beinhaltet. Weiterhin sind Mittel zur Aufheizung der flüssigen Harnstofflösung vorgesehen.

Hiervon ausgehend liegt der vorliegenden Erfindung die Aufgabe zugrunde, ein Verfahren und eine Vorrichtung vorzuschlagen, mit denen die aus dem Stand der Technik bekannten Nachteile zumindest gelindert werden können.

Diese Aufgabe wird gelöst durch eine Vorrichtung und ein Verfahren mit den Merkmalen der unabhängigen Ansprüche. Vorteilhafte Weiterbildungen sind Gegenstand der jeweiligen abhängigen Ansprüche.

Die Erfindung betrifft eine Vorrichtung zum Bereitstellen eines gasförmigen Stoffgemisches umfassend mindestens einen der folgenden Stoffe:
a) mindestens ein Reduktionsmittel umfassend Ammoniak und
b) mindestens einen Reduktionsmittelvorläufer umfassend Harnstoff,
wobei ein Reservoir für eine wässrige Lösung umfassend mindestens einen Reduktionsmittelvorläufer ausgebildet ist, aus dem wässrige Lösung mittels eines Fördermittels in mindestens eine Zugabeleitung mit Abgabeöffnung förderbar ist, wobei Mittel zur Aufheizung der Zugabeleitung ausgebildet sind.

Die erfindungsgemäße Vorrichtung ist
dadurch gekennzeichnet, dass
mit den Mitteln die mindestens eine Zugabeleitung auf eine Temperatur über einer kritischen Temperatur von mehr als 300 Grad Celsius aufheizbar ist, wobei die kritische Temperatur größer als die Siedetemperatur von Wasser ist und wobei die Vorrichtung so ausegbildet ist, dass im Betrieb die Temperatur über die Länge der Zugabeleitung höchstens 25 Grad Celsius oberhalb und unterhalb einer mittleren Temperatur liegt.

Unter einem Reduktionsmittel wird hier ein Reduktionsmittel verstanden, welches im Rahmen der selektiven katalytischen Reduktion von Stickoxiden einsetzbar ist und Ammoniak umfasst. Unter einem Reduktionsmittelvorläufer wird ein Stoff verstanden, welcher ein Reduktionsmittel abspaltet oder unter Abgabe eines Reduktionsmittels mit anderen Stoffen reagiert und Harnstoff umfasst. So kann ein Ammoniakvorläufer wie beispielsweise Harnstoff Ammoniak abspalten oder unter Abgabe von Ammoniak reagieren. Unter einer wässrigen Lösung wird die Lösung des Reduktionsmittelvorläufers in Wasser verstanden, wobei die wässrige Lösung weitere Inhaltsstoffe umfassen kann. Unter der Abgabeöffnung wird die Öffnung verstanden, aus der das gasförmige Stoffgemisch abgegeben wird. Insbesondere liegt die kritische Temperatur bei der Temperatur, ab der eine vollständige Verdampfung der wässrigen Lösung erfolgt. Vollständig bedeutet hier insbesondere, dass mindestens 90 Gewichts-% der wässrigen Lösung verdampfen, bevorzugt mindestens 95 Gewichts-%, besonders bevorzugt mindestens 98 Gewichts-%. Die kritische Temperatur liegt oberhalb von 300°C, bevorzugt oberhalb von 350°C oder sogar oberhalb von 400°C, insbesondere bei etwa 420°C oder sogar 450°C. Bevorzugt können bei größeren benötigten Mengen an Dampf mehrere Zugabeleitungen ausgebildet sein, beispielsweise in Abgassystemen von Lastkraftwagen. Unter einer Zugabeleitung wird ein durchströmbares Volumen verstanden, welches durch Wandungen begrenzt ist. Insbesondere kann es sich hierbei um eine Art Röhre oder auch um einen von Wänden begrenzten Kanal handeln. Hierbei kann der Kanal auch in einem größeren Bauteil ausgebildet sein.

Die erfindungsgemäße Vorrichtung erlaubt in vorteilhafter Weise die Verdampfung einer wässrigen Lösung eines Reduktionsmittelvorläufers, beispielsweise einer Harnstoff-Wasserlösung. Bei der Verdampfung wird erfolgt einerseits eine Verdampfung des Reduktionsmittelvorläufers und andererseits je nach gewählter Temperatur auch eine Thermolyse zumindest von Teilen des Reduktionsmittelvorläufers hin zum Reduktionsmittel. Bevorzugt ist stromabwärts ein Hydrolysekatalysator ausgebildet, an welchem eine Umsetzung des Reduktionsmittelvorläufers zu Reduktionsmittel erfolgt. Der Hydrolysekatalysator ist besonders bevorzugt in einem gemeinsamen Gehäuse mit der Zugabeleitung ausgebildet. Hierdurch wird die Temperierung der Zugabeleitung und/oder des Hydrolysekatalysators erleichtert, da Wärmeleitung zwischen Zugabeleitung und Hydrolysekatalysator und umgekehrt stattfindet. Bevorzugt ist dieses Gehäuse und damit Zugabeleitung und Hydrolysekatalysator durch eine oder mehrere mindestens einen elektrischen Heizwiderstand umfassende Heizpatronen beheizbar. Die erfindungsgemäße Vorrichtung kann in besonders vorteilhafter Weise Teil eines SCR-Katalysatorsystems sein, mit welchem eine Reduktion des Stickoxidanteils im Abgas von Verbrennungskraftmaschinen erreicht wird. Besonders bevorzugt wird die erfindungsgemäße Vorrichtung im Abgassystem von Kraftfahrzeugen wie beispielsweise Automobilen, motorisierten Zweirädern, Wasserfahrzeugen und Luftfahrzeugen eingesetzt.

Zwischen dem Reservoir und der beheizbaren Zugabeleitung kann eine Förderleitung ausgebildet sein, die unbeheizt ist oder die auf eine Temperatur unterhalb der kritischen Temperatur temperiert wird. Als besonders vorteilhaft hat es sich erwiesen, eine solche Förderleitung auf bis zu 80°C zu erhitzen. Die Regelung der Temperatur der Förderleitung und der Zugabeleitung und gegebenenfalls des stromabwärts ausgebildeten Hydrolysekatalysators kann in vorteilhafter Weise getrennt oder in einer gemeinsamen Regelschleife erfolgen.

Gemäß einer vorteilhaften Ausgestaltung der erfindungsgemäßen Vorrichtung umfasst das Fördermittel eine Pumpe.

Insbesondere dient die Pumpe auch zum Dosieren der wässrigen Lösung, dass heißt zur portionierten Abgabe der wässrigen Lösung in die Zugabeleitung. Bevorzugt ist hierbei eine Dosierpumpe als Fördermittel ausgebildet. Unter einer Dosierpumpe wird insbesondere eine Pumpe verstanden, die die Förderung von definierten Volumina pro Zeiteinheit oder pro Pumpenhub erlaubt. Die Dosierpumpe weist insbesondere eine maximale Förderleistung von bis zu 125 ml/min, insbesondere von bis zu 30 ml/min auf. Die Dosierpumpe erlaubt in vorteilhafter weise einen kontinuierlichen Volumenstrom, der um höchstens 5% um einen Nennstrom herum schwankt. Die Dosierpumpe ist in vorteilhafter Weise so ausgestaltet, dass sie eine Rückförderung hin zu einem Reservoir erlaubt, insbesondere mit ähnlichen Volumenströmen wie die übliche Förderleistung. Die Dosierpumpe erlaubt vorteilhafterweise einen Förderdruck von bis zu 6 bar absolut, insbesondere von bis zu 2 bar absolut.

Gemäß einer weiteren vorteilhaften Ausgestaltung der erfindungsgemäßen Vorrichtung ist ein Ventil zur Dosierung der Menge der wässrigen Lösung zwischen Fördermittel und Zugabeleitung ausgebildet.

In einer solchen Ausgestaltung kann eine Pumpe die wässrige Lösung dauerhaft unter einem vorbestimmten oder festlegbaren Druck halten, wobei die Dosierung durch Öffnen und Schließen des Ventils erfolgen kann.

Gemäß einer vorteilhaften Weiterbildung der erfindungsgemäßen Vorrichtung umfassen die Mittel zur Aufheizung mindestens eines der folgenden Elemente:
a) eine elektrische Widerstandsheizung;
b) Wärmeübertragungsmittel zur Nutzung der Abwärme mindestens eines anderen Bauteils;
c) mindestens ein Peltier-Element und
d) ein Mittel zur Verbrennung eines Kraftstoffes.

Unter einem anderen Bauteil wird hierbei insbesondere ein Bauteil verstanden, welches beispielsweise Teil eines Kraftfahrzeuges ist und welches bevorzugt eine Temperatur oberhalb der kritischen Temperatur aufweist. Beispielsweise kann es sich hierbei um Teile der Abgasleitung oder des Abgassystems, insbesondere um Katalysatorträgerkörper handeln. Weiterhin kann es sich hierbei um von einem Wärmeübertragungsmedium wie Öl durchströmte Bauteile oder Ähnliches handeln. Unter einer elektrischen Widerstandsheizung wird eine übliche Heizung verstanden, die auf der Erzeugung von Ohmscher Wärme beruht. Insbesondere kann unter einer elektrischen Widerstandsheizung auch mindestens ein Heizelement aus einem Werkstoff mit einem positiven Temperaturkoeffizienten (PTC, positive temperature coefficient) verstanden werden. Unter einem Werkstoff mit einem positiven Temperaturkoeffizienten, einem sogenannten PTC-Widerstand, werden insbesondere stromleitende Materialien verstanden, deren elektrischer Widerstand mit der Temperatur steigt. Diese werden insbesondere in Form sogenannter selbstregelnder Heizelemente eingesetzt und sind insbesondere aus einem keramischen Material, insbesondere einer Bariumtitanatkeramik ausgebildet. Alternativ können auch PTC-Widerstände aus einem Polymermaterial, insbesondere aus einem mit Rußpartikeln dotierten Polymermaterial eingesetzt werden.

Unter einem Peltier-Element versteht man insbesondere ein elektrisches Bauelement, welches bei Stromdurchfluss eine Temperaturdifferenz erzeugt, die auf dem so genannten Peltier-Effekt beruht. Vorzugsweise umfasst ein Peltier-Element ein oder mehrere Elemente aus p- und n-dotiertem Halbleitermaterial, die abwechselnd über elektrisch leitendes Material miteinander verbunden sind. Das Vorzeichen der Temperaturdifferenz ist abhängig von der Richtung des Stromflusses, so dass sowohl eine Kühlung als auch eine Heizung mit einem Peltier-Element realisierbar ist.

Als besonders vorteilhaft hat sich der Einsatz der elektrischen Widerstandsheizung, gegebenenfalls in Kombination mit einer Nutzung der Abwärme anderer Bauteile erwiesen. Die elektrische Widerstandsheizung erlaubt es in besonders vorteilhafter Weise, einen sehr dynamischen Regelkreis aufzubauen, bei dem die abzugebende Menge an gasförmigem Stoff sehr dynamisch, d. h. sehr schnell reagierend regelbar ist. Insbesondere sind die Mittel zum Aufheizen beispielsweise die Widerstandsheizung so ausgelegt, dass sie neben der aufzubringenden Verdampfungsenthalpie der wässrigen Lösung einen Leistungspuffer zum Ausgleich eventueller Wärmeverluste der Vorrichtung aufweist. Die Widerstandsheizung kann beispielsweise in Form eines Heizleiters und/oder in Form mindestens eines stabförmigen Heizelements ausgebildet sein. Unter Kraftstoff werden insbesondere Kohlenwasserstoffe und/oder Wasserstoff verstanden. Die Verbrennung kann auch flammlos erfolgen.

Die erfindungsgemäße Vorrichtung ist so ausgebildet, dass im Betrieb die Temperatur über die Länge der Zugabeleitung höchstens 25°C oberhalb und unterhalb einer mittleren Temperatur liegt.

Dies wird insbesondere durch die bauliche Gestaltung der Zugabeleitung erreicht Insbesondere ist die Zugabeleitung so mit einem Heizleiter einer elektrischen Widerstandsheizung verbunden, dass dieser so mit der Zugabeleitung in Kontakt steht, dass die geforderte Konstanz des Temperaturprofils erreicht werden kann. Dies kann beispielsweise dadurch erfolgen, dass die Zugabeleitung in engen Wicklungen von einem Heizleiter umgeben ist oder dass Zugabeleitung und Heizleiter gemeinsam beispielsweise zu einer Spirale aufgewickelt werden. Bevorzugt ist auch eine stoffschlüssige Verbindung zwischen Heizleiter und Zugabeleitung. Weiterhin kann dies dadurch gewährleistet sein, dass die Zugabeleitung mit der Förderleitung durch eine Verbindungseinheit verbunden ist, welche Wärmeverluste von der Zugabeleitung hin zu der Förderleitung minimiert oder doch in einem so kleinen Bereich hält, dass dies durch die Widerstandheizung ausgeglichen werden kann. Besonders vorteilhaft kann hier ein zweiter Widerstandsheizungskreis im Bereich der Verbindungseinheit zwischen Förderleitung und Zugabeleitung ausgebildet sein, um die dort je nach Betriebszustand auftretenden Wärmeverluste lokal ausgleichen zu können. Insbesondere kann hierbei ein Heizleiter mit sich veränderndem Durchmesser zum Einsatz kommen, so dass im Bereich benachbart zur Verbindungseinheit eine höhere Wärmeabgabe vorliegt als in weiter entfernten Bereichen der Zugabeleitung. Weiterhin kann in besonders vorteilhafter Weise eine Grundaufheizung durch Kontakt beispielsweise mit der Abgasleitung erreicht werden. Dieser Kontakt besteht insbesondere in einem Wärme leitenden Kontakt durch einen Wärmeleiter oder auch dadurch, dass die entsprechende Vorrichtung mit der Abgasleitung verbunden oder auf, an oder in dieser angebracht ist.

Gemäß einer weiteren vorteilhaften Ausgestaltung der erfindungsgemäßen Vorrichtung weist die Zugabeleitung einen durchströmbaren Querschnitt von höchsten 20 mm² auf.

Bevorzugt ist der durchströmbare Querschnitt über die Länge der Zugabeleitung konstant. Die Zugabeleitung kann alternativ bei rundem Querschnitt einen Durchmesser von 1 bis 3 mm aufweisen. Diese durchströmbaren Querschnitte erlauben es in vorteilhafter Weise, eine möglichst vollständige Verdampfung bei relativ geringem Energieeinsatz zu erreichen bei gleichzeitiger geringer Wahrscheinlichkeit der Verblockung des Querschnitts durch Nebenprodukte. Der hier vorgeschlagene Maximalquerschnitt erlaubt weiterhin in vorteilhafter Weise eine sehr dynamische Steuerung der abgegebenen Dampfmenge, so dass sich eine solche Vorrichtung besonders vorteilhaft zum Einsatz in Abgassystemen von Verbrennungskraftmaschinen eignet. Alternativ oder zusätzlich ist der durchströmbare Querschnitt größer als 0,2 mm². Liegt der Querschnitt unterhalb dieses Mindestquerschnitts, so kann die Leitung durch im Betrieb entstehende Ablagerungen am Rand der Zugabeleitung verstopfen, beispielsweise kann sich dort Harnstoff absetzen. Diese Verstopfung der Zugabeleitung kann beispielsweise durch ein verstärktes Erhitzen wieder aufgelöst werden. Je nach dynamischer Situation ist ein solches stärkeres Erhitzen entweder nicht möglich oder die abzugebende Reduktionsmittelmenge, die sich aus der dann möglichen zuzugebenden Menge ergibt, ist zu niedrig.

Gemäß einer weiteren vorteilhaften Ausgestaltung der erfindungsgemäßen Vorrichtung ist die Zugabeleitung aus einem Material umfassend mindestens einen der folgenden Werkstoffe ausgebildet:
a) Kupfer;
b) Aluminium;
c) Nickel-Basiswerkstoff;
d) Chrom-Nickel-Stahl und
e) Edelstahl.

Insbesondere Materialien, die eine gute Wärmeleitung ermöglichen, haben sich als vorteilhaft erwiesen. Besonders vorteilhaft ist hier der Einsatz von Edelstahl, Chrom-Nickel-Stahl und/oder Nickelbasiswerkstoffen oder entsprechender Legierungen, da diese Werkstoffe weitgehend korrosionsfest gegenüber den Lösungen aus Reduktionsmittelvorläufer (beispielsweise Harnstoff) und auch gegenüber Ameisensäure sind. Besonders bevorzugt sind die Werkstoffe 1.4401, 1.4301, 1.4828, 2.4646, 2.4816 und/oder 2.4633 gemäß Deutscher Industrienorm, besonders bevorzugt 2.4816. Als besonders vorteilhaft hat sich der Einsatz von Aluminium oder von Aluminiumhaldgen Materialien zur Ausbildung zumindest der innenseitigen Oberfläche der Zugabeleitung erwiesen. Die sich auf der Oberfläche bildenden Aluminiumoxide fördern die Thermo- und/oder Hydrolyse von Harnstoff zu Ammoniak, so dass sich der Umsetzungsgrad von Reduktionsmittelvorläufer zu Reduktionsmittel selbst ohne Ausbildung einer zusätzlichen die Hydrolyse katalysierenden Beschichtung im Vergleich zu anderen Materialien vorteilhaft erhöht.

Bei dem erfindungsgemäßen Fördermittel handelt es sich besonders bevorzugt um eine entsprechend ausgestaltete Pumpe. Mittels der Pumpe kann die Menge der in der Zugabeleitung verdampfbaren wässrigen Lösung beeinflusst werden. Beim Abschalten der erfindungsgemäßen Vorrichtung kann die Fördereinrichtung in bevorzugter Weise für eine Rückförderung beispielsweise beim Abschalten des Systems genutzt werden, wobei der noch nicht verdampfte Rest an wässriger Lösung in der Zugabeleitung zurück ins Reservoir gefördert wird. Dies führt in besonders vorteilhafter Weise dazu, dass eine Abgabe des Reduktionsmittelvorläufers an die Umwelt wirksam vermieden wird.

Bevorzugt erfolgt die Regelung der erzeugten Menge an Reduktionsmittel über eine Regelung der Leistung der Fördermittel. Weitere Regelmechanismen wie beispielsweise die einzubringende Heizleistung, eine Taktung eines Ventils, mit dem die Zugabe an wässriger Lösung zur Zugabeleitung gesteuert wird und ähnliches sind möglich und erfindungsgemäß. Insbesondere kann in besonders vorteilhafter Weise die Regelung der Leistung der Fördereinrichtung gekoppelt mit der Regelung der Heizleistung erfolgen, insbesondere derart, dass bei einer gesteigerten Förderleistung die Heizleistung gesteigert wird.

Gemäß einer weiteren vorteilhaften Ausgestaltung der erfindungsgemäßen Vorrichtung weist die Zugabeleitung eine Länge von 0,1 bis 5 m auf.

Die Länge der Zugabeleitung wird anhand der maximalen zu erwartenden Förderleistung, also in Abhängigkeit von der maximalen Stickoxidkonzentration im Abgas der Verbrennungskraftmaschine festgelegt. Mit steigender maximaler Stickoxidkonzentration steigt auch die Länge der Zugabeleitung. Bevorzugt ist eine Länge der Förderleitung von 0,2 bis 0,8 m, besonders bevorzugt von 0,5 m.

Gemäß einer weiteren vorteilhaften Ausgestaltung der erfindungsgemäßen Vorrichtung weist die Zugabeleitung eine Wandstärke von 0,1 bis 0,5 mm auf.

DieseeWandstärken haben sich als besonders vorteilhaft erwiesen, da sie eine gute Aufheizung erlauben und gleichzeitig eine genügend große Wärmekapazität aufweisen, dass bei einem starken Anstieg der zu verdampfenden Menge an wässriger Lösung zunächst aufgrund der hohen Wärmekapazität eine Verdampfung erfolgt, bis die Mittel zum Aufheizen der Zugabeleitung eine genügend große Heizleistung abgeben können.

Gemäß einer weiteren vorteilhaften Ausgestaltung der erfindungsgemäßen Vorrichtung weist die Zugabeleitung eine Wärmekapazität von mindestens 150 J/K

Diese Wärmekapazitäten können in vorteilhafter Weise dazu dienen, eine Trägheit der Mittel zum Aufheizen der Zugabeleitung bei großen Transienten der Heizleistung zu kompensieren. Bevorzugt ist sogar eine Ausgestaltung, bei der die Wärmekapazität mindestens 200 J/K beträgt.

Bevorzugt weist die die Zugabeleitung mindestens einen Richtungswechsel, bevorzugt um mindestens 90° auf. Hierdurch werden Flüssigkeitstropfen, die von einem expandierenden Gasvolumen beschleunigt werden, durch Auftreffen auf die Wand der Zugabeleitung aufgelöst und weiter verdampft. Weiterhin bevorzugt sind mindestens zwei solcher Richtungswechsel. Die Oberflächenrauhigkeit R_{z} der Zugableitung liegt bevorzugt bei 8 bis 12 Mikrometer. Unter der Oberflächenrauhigkeit R_{z} wird insbesondere eine gemittelte Rautiefe verstanden, die durch die Messung der Abstände der zu messenden Oberfläche von einer definierten Fläche verstanden, wobei auf fünf Messstrecken der jeweils maximale und minimale Abstand bestimmt und jeweils aus diesen die Differenz gebildet wird. Die gemittelte Rautiefe ergibt sich aus dem Mittelwert dieser fünf Differenzen. Diese Oberflächenrauhigkeiten haben sich als besonders vorteilhaft erwiesen, da sie den Wärmeübergang befördern und somit die Verdampfungseffektivität erhöhen. Die Wärmeleitfähigkeit des Werkstoffs, aus dem die Zugabeleitung ausgebildet ist, liegt bevorzugt bei mindestens 200 W/(m K) (Watt pro Meter und Kelvin) bei 0°C. Zumindest Teilbereiche der Oberfläche der Zugableitung umfassen Oxide von Aluminium, Titan und/oder Vanadium zur Förderung der Hydrolyse von Reduktionsmittelvorläufer zu Reduktionsmittel, insbesondere von Harnstoff zu Ammoniak.

Gemäß einer weiteren vorteilhaften Ausgestaltung der erfindungsgemäßen Vorrichtung haben die Zugabeleitung und die Mittel zur Aufheizung der Zugabeleitung zumindest in mindestens einem Teilbereich mindestens eine der folgenden Anordnungen zueinander:
a) Zugabeleitung und Mittel zur Aufheizung der Zugabeleitung sind in mindestens einem Teilbereich koaxial zueinander ausgebildet;
b) Zugabeleitung und Mittel zur Aufheizung der Zugabeleitung sind in mindestens einem Teilbereich konzentrisch zueinander ausgebildet;
c) Zugabeleitung und Mittel zur Aufheizung der Zugabeleitung sind in mindestens einem Teilbereich nebeneinander angeordnet;
d) die Zugabeleitung ist zumindest in einem Teilbereich um das Mittel zur Aufheizung der Zugabeleitung herum gewunden ausgebildet;
e) das Mittel zur Aufheizung der Zugabeleitung stellt zumindest in Teilbereichen ein stabförmiges Heizelement dar, um das die Zuleitung herum gewunden ausgebildet ist und
e) die Zugabeleitung bildet einen Kanal in einem stabförmigen Heizelement.

Gemäß einer weiteren vorteilhaften Ausgestaltung der erfindungsgemäßen Vorrichtung sind die Zugabeleitung und das Mittel zur Aufheizung der Zugabeleitung zumindest in Teilbereichen stoffschlüssig miteinander verbunden.

Insbesondere sind die Zugabeleitung und das Mittel zur Aufheizung der Zugabeleitung miteinander hartverlötet ("brazed") und/oder verschweißt.

Gemäß einer weiteren vorteilhaften Ausgestaltung der erfindungsgemäßen Vorrichtung ist die Zugabeleitung zumindest teilweise mit einer die Hydrolyse eines Reduktionsmittelvorläufers zu einem Reduktionsmittel katalysierenden Beschichtung versehen.

So kann bereits ein Teil der oder die gesamte Zugabeleitung zur Hydrolyse des Reduktionsmittelvorläufers eingesetzt werden.

Gemäß einer weiteren vorteilhaften Ausgestaltung der erfindungsgemäßen Vorrichtung umfasst diese mindestens einen Messfühler zur Bestimmung der Temperatur der Zugabeleitung.

Insbesondere können die Mittel zur Aufheizung der Zugabeleitung, wenn diese eine elektrische Widerstandsheizung umfassen, durch Messen des Widerstandes zur Temperaturmessung eingesetzt werden. Alternativ oder zusätzlich kann mindestens ein Messfühler beispielsweise in Form eines Thermowiderstandes ausgebildet sein.

Gemäß einer weiteren vorteilhaften Ausgestaltung der erfindungsgemäßen Vorrichtung ist der Messfühler mit einer Stromquelle verbindbar.

Der Messfühler kann so auch als Widerstandsheizung Verwendung finden, beispielsweise in Form eines Notfallprogramms, wenn sich die Zugabeleitung zugesetzt hat Im Rahmen dieses Notfallprogramms kann die Zugabeleitung auf eine Temperatur höher als die kritische Temperatur, bevorzugt deutlich höher als die kritische Temperatur aufgeheizt werden. Bevorzugt sind hierbei Temperaturen von 550°C und mehr, insbesondere 600°C und mehr.

Gemäß einem weiteren Aspekt der vorliegenden Erfindung wird ein

Verfahren zum Bereitstellen eines gasförmigen Stoffgemisches vorgeschlagen, umfassend mindestens einen der folgenden Stoffe:
a) mindestens ein Reduktionsmittel umfassend Ammoniak und
b) mindestens einen Reduktionsmittelvorläufer umfassend Harnstoff verstanden,
wobei eine wässrige Lösung mindestens eines Reduktionsmittelvorläufers aus einem Reservoir in eine Zugabeleitung gefördert wird, wobei die Zugabeleitung beheizt wird.

Das erfindungsgemäße Verfahren ist
dadurch gekennzeichnet, dass
die Zugabeleitung auf eine Temperatur über einer kritischen Temperatur von mehr als 300 Grad Celsius so beheizt wird, dass die wässrige Lösung vollständig zu dem gasförmigen Stoffgemisch verdampft, und weiter
die Temperatur über eine Länge der Zugabeleitung höchstens 25 Grad Celsius oberhalb oder unterhalb einer mittleren Temperatur liegt.

Unter einer vollständigen Verdampfung wird insbesondere verstanden, dass die wässrige Lösung oder Wasser die Zugabeleitung überwiegend nicht in Form von Tropfen verlässt. Insbesondere wird unter einer vollständigen Verdampfung verstanden, dass 90 Gewichts-% und mehr, bevorzugt 9 Gewichts-% und mehr, besonders bevorzugt 98 Gewichts-% und mehr der wässrigen Lösung verdampft werden. Das Reduktionsmittel umfasst Ammoniak, der Reduktionsmittelvorläufer umfasst Harnstoff. Bevorzugt können bei größeren benötigten Mengen an Dampf mehrere Zugabeleitungen ausgebildet sein, beispielsweise in Abgassystemen von Lastkraftwagen.

Besonders bevorzugt ist auch ein Verfahren zur selektiven katalytischen Reduktion von Stickoxiden im Abgas einer Verbrennungskraftmaschine, bei dem Harnstoff in wässriger Lösung vorliegt und aus einem Reservoir in eine Zugabeleitung gefördert wird, wobei die Zugabeleitung so beheizt wird, dass die wässrige Lösung im Wesentlichen vollständig zu einem mindesten einen der folgenden Stoffe umfassenden gasförmigen Stoffgemisch verdampft wird:
a) Ammoniak und
b) Harnstoff,
wobei das gasförmige Stoffgemisch stromaufwärts eines SCR-Katalysators in das Abgassystem eingeführt wird. Besonders bevorzugt ist zwischen der Zugabe des gasförmigen Stoffgemisches und dem SCR-Katalysator ein Hydrolysekatalysator ausgebildet.

Unter einem Katalysator wird im Rahmen dieser Erfindung ein Trägerkörper verstanden, welcher eine entsprechende katalytische Beschichtung aufweist. Besonders bevorzugt handelt es sich bei dem Trägerkörper um einen Wabenkörper aus keramischem oder metallischem Material, ein entsprechend beschichtetes Rohr, ein Wiremesh-Träger oder ähnliches. Ein Hydrolysekatalysator stellt also einen Katalysatorträgerkörper dar, welcher eine die Hydrolyse mindestens eines Reduktionsmittelvorläufers und insbesondere von Harnstoff katalysiert, insbesondere eine entsprechend ausgestaltete Beschichtung aufweist. Ein SCR-Katalysator stellt also einen Katalysatorträgerkörper dar, welcher eine die selektive katalytische Reduktion (selective catalytic reduction) von Stickoxiden katalysierende Beschichtung aufweist.

Besonders vorteilhaft ist hierbei, wenn der Reduktionsmittelvorläufer in einer wässrigen Lösung zugegeben wird, die weitere Bestandteile, insbesondere zur Gefrierpunktserniedrigung, umfasst. Insbesondere kann die wässrige Harnstofflösung Ammoniumformiat, also das entsprechende Salz der Ameisensäure, und/oder Ameisensäure umfassen. Eine entsprechende Lösung ist unter dem Markennamen "Denoxium" erhältlich.

Je nach Ausgestaltung des Abgassystems, in dem das erfindungsgemäße Verfahren zur Anwendung kommt und insbesondere in Abhängigkeit von der Ausgestaltung der Zugabeleitung, der wässrigen Lösung und insbesondere auch in Abhängigkeit von der Wahl des oder der Reduktionsmittelvorläufer und des oder der Reduktionsmittel können andere Temperaturen nötig sein, auf die die Zugabeleitung aufgeheizt werden muss. Beim Einsatz einer wässrigen Harnstofflösung, die beispielsweise auch als "AdBlue" oder als "Denoxium" vertrieben wird, haben sich Temperaturen von 350°C oder mehr und sogar insbesondere von 400 bis 450°C, insbesondere von etwa 420°C als besonders vorteilhaft erwiesen.

Der Reduktionsmittelvorläufer umfasst
Harnstoff
in der wässrigen Lösung.

So kann insbesondere das erfindungsgemäße Verfahren zur Bildung eines Stoffgemisches führen, welches Harnstoff und gegebenenfalls auch bereits Ammoniak umfasst. Besonders bevorzugt wird das Stoffgemisch einem stromabwärts gelegenen Hydrolysekatalysator zur weiteren Hydrolyse und somit zur Bildung von Ammoniak zugeführt. Bevorzugt wird hierdurch im Betrieb eine im Wesentlichen vollständige Umsetzung in das Reduktionsmittel erreicht, insbesondere von 90 Gewichts-% und mehr, bevorzugt von 95 Gew.-% und mehr, besonders bevorzugt von 98 Gew.-% und mehr.

Gemäß einer weiteren vorteilhaften Ausgestaltung des erfindungsgemäß0en Verfahrens liegen die Temperaturen in der Zugabeleitung zwischen 380 und 450 °C.

Diese Temperaturen haben sich als besonders vorteilhaft erwiesen, da sie einerseits zu einer im Wesentlichen vollständigen Verdampfung der wässrigen Lösung fuhren und andererseits wirksam die übermäßige Bildung von Ablagerungen im Inneren der Zugabeleitung verhindern. Bevorzugt beträgt die Temperatur in der Zugabeleitung etwa 380°C.

Die Temperatur liegt über eine Länge der Zuleitung höchstens 25°C oberhalb oder unterhalb einer mittleren Temperatur.

Diese Temperaturkonstanz führt in besonders vorteilhafter Weise dazu, dass die Bildung von Ablagerungen wirksam vermieden wird. Entsprechende Versuche haben überraschenderweise gezeigt, dass keineswegs ein Punkt mit einer Temperatur unterhalb der Kondensationstemperatur eines der Stoffe vorliegen muss um eine Ablagerung zu bilden. Vielmehr hat es sich gezeigt, dass bereits relativ geringe Temperaturschwankungen der Zugabeleitung dazu führen, dass an den kälteren Stellen ein Niederschlag stattfand, insbesondere von Harnstoff, der zu einer Verstopfung der Zugabeleitung oder doch zu einer Herabsetzung der Förderleistung aufgrund einer Verringerung des durchströmbaren Querschnitts der Zugabeleitung führte. Es hat sich gezeigt, dass eine Verfahrensführung, bei der eine möglichst konstante Temperatur über die Länge der Zugabeleitung vorliegt, vorteilhaft ist, da hier im Wesentlichen keine Ablagerungen gebildet werden. Insbesondere ist die Verfahrensführung so zu wählen, dass ein Schwankungsbereich von etwa 50°C, also eine Temperatur von höchstens 25°C oberhalb und unterhalb einer mittleren Temperatur über die Länge der Zugabeleitung nicht überschritten wird.

Gemäß einer weiteren vorteilhaften Ausgestaltung des erfindungsgemäßen Verfahrens wird eine Heizleistung bei der Beheizung eingesetzt, die sich um bis zu 500 Watt/s ändert.

Eine solche Heizleistung führt in vorteilhafter Weise dazu, dass ein besonders dynamisches System ausgebildet werden kann, bei dem die zur Verfügung gestellte Menge des gasförmigen Stoffgemisches in besonders vorteilhafter Weise sehr schnell an die Anforderungen des entsprechenden Systems angepasst werden können.

Gemäß einer weiteren vorteilhaften Ausgestaltung des erfindungsgemäßen Verfahrens wird eine Menge von bis zu 0,5 ml/s der wässrigen Lösung in die Zugabeleitung gefördert.

Diese Menge hat sich als ausreichend erwiesen, um auch hohe Bedarfsspitzen des gasförmigen Stoffgemisches oder beispielsweise eines in dem gasförmigen Stoffgemisch enthaltenen Reduktionsmittels zu decken.

Gemäß einer weiteren vorteilhaften Ausgestaltung des erfindungsgemäßen Verfahrens weist die Zugabeleitung einen durchströmbaren Querschnitt von höchstens 20 Quadratmillimetern auf.

Ein solcher maximaler Querschnitt erlaubt einerseits eine sehr dynamische Verfahrensführung, so dass große Mengen des gasförmigen Stoffgemisches in einem sehr kurzen Zeitraum zur Verfügung gestellt werden können und ermöglichen andererseits den Aufbau eines kleinen und kompakten Systems, welches mit nur sehr geringem Platzbedarf gerade auch in mobilen Anwendungen beispielsweise im Abgassystem von Kraftfahrzeugen eingesetzt werden kann.

Gemäß einer weiteren vorteilhaften Ausgestaltung des erfindungsgemäßen Verfahrens wird die Zugabeleitung auf eine zweite Temperatur geheizt, die größer als die kritische Temperatur ist, bei der eine vollständige Verdampfung der wässrigen Lösung vorliegt.

Dies kann insbesondere dann erfolgen, wenn die Zugabeleitung verstopft ist, um Ablagerungen in der Zugabeleitung aufzulösen und/oder reagieren zu lassen. Die zweite Temperatur liegt dabei bei bis zu 600°C, bevorzugt bei bis zu 800°C, besonders bevorzugt bei bis zu 900°C. Ist die Zugabeleitung aus Aluminium ausgebildet, beträgt vorteilhafter Weise die zweite Temperatur 500°C.

Gemäß einer weiteren vorteilhaften Ausgestaltung des erfindungsgemäßen Verfahrens wird vor Beginn der Verdampfung die Temperatur der Zugabeleitung bestimmt und mit anderen bekannten Temperaturen abgeglichen.

Insbesondere können hier die Messwerte von Messfühlern verwendet werden, die die Temperatur von anderen Bauteilen bestimmen, beispielsweise eines Außenthermometers, eines Thermometers zur Bestimmung der Kühlwassertemperatur oder ähnliches genutzt werden.

Gemäß einer weiteren vorteilhaften Ausgestaltung des erfindungsgemäßen Verfahrens wird die Aufheizung der Zugabeleitung über eine elektrische Widerstandsheizung durchgeführt, bevorzugt über einen Heizleiter, wobei vor Beginn der Aufheizung der Widerstand dieser Widerstandsheizung bestimmt wird und in Abhängigkeit von dem ermittelten Widerstand eine Aufheizung der Zugabeleitung erfolgt.

Insbesondere ist es so möglich, bei Schäden in der Widerstandsheizung den Benutzer zu warmen oder ähnliches.

Gemäß einer weiteren vorteilhaften Ausgestaltung des erfindungsgemäßen Verfahrens wird die Heizleistung bei der Beheizung der Zugabeleitung überwacht.

Bevorzugt wird hierbei die Beheizung unterbrochen, wenn die Heizleistung über eine vorgebbare Zeitspanne unter einem von der zu verdampfenden Menge wässriger Lösung abhängigen Wert bleibt.

Dies indiziert bei erfolgender Regelung, dass eine Verstopfung oder doch ein verringerter frei durchströmbarer Querschnitt der Zugabeleitung vorliegt. In diesem Falle können Notfallmaßnahmen, beispielsweise ein Betrieb der Mittel zur Aufheizung der Zugabeleitung auf einer zweiten, höheren Temperaturstufe, eingeleitet werden um so die Zugabeleitung durch Auflösung und/oder Reaktion der Ablagerungen in der Zugabeleitung zu säubern.

In einem Automobil kann dann, wenn die Mittel zum Aufheizen der Zugabeleitung eine elektrische Widerstandsheizung umfassen, eine Stromversorgung durch einen Generator des Automobils, beispielsweise eine Lichtmaschine erfolgen, wobei der Strom bevorzugt vor einer Regulierung der Spannung der Lichtmaschine abgegriffen wird, da hier üblicherweise höhere Spannungen vorliegen.

Die für die erfindungsgemäße Vorrichtung offenbarten Details und Vorteile lassen sich auf das erfindungsgemäße Verfahren übertragen und anwenden. Die für das erfindungsgemäße Verfahren offenbarten Details und Vorteile lassen sich auf die erfindungsgemäße Vorrichtung übertragen und anwenden.

Im Folgenden wird die Erfindung anhand der beigefügten Figuren näher erläutert, ohne dass die Erfindung auf die dort gezeigten Ausführungsbeispiele beschränkt wäre. Es zeigen schematisch:
- Fig. 1: eine Vorrichtung zum Bereitstellen eines gasförmigen Stoffgemisches in einer ersten Ausführungsform als perspektivische Ansicht;
- Fig. 2: die erste Ausführungsform der Vorrichtung zum Bereitstellen eines gasförmigen Stoffgemisches in einer Schnittansicht;
- Fig. 3: eine Förderleitung zur Förderung der wässrigen Lösung von einem Reservoir zur Zugabeleitung;
- Fig. 4: eine Ansicht einer Vorrichtung zur selektiven katalytischen Reduktion von Stickoxid im Abgas einer Verbrennungskraftmaschine;
- Fig. 5: schematisch ein zweites Ausführungsbeispiel einer Verdampfereinheit;
- Fig. 6: eine Vorrichtung zum Bereitstellen eines Reduktionsmittels;
- Fig. 7: schematisch eine alternative Ausführungsform der Verdampfereinheit im Querschnitt;
- Fig. 8: ein Detail einer Mündung einer Dosierleitung in eine Abgasleitung;
- Fig. 9: ein Ausführungsbeispiel einer Vorrichtung zur Bereitstellung eines gasförmigen Stoffgemisches im Schnitt;
- Fig. 10: schematisch eine Vorrichtung zur Bereitstellung eines gasförmigen Stoffgemisches;
- Fig. 11: ein Beispiel einer möglichen Zugabeeinheit des Reduktionsmittelstoffgemisches zum Abgas;
- Fig. 12: eine weitere Möglichkeit einer Zugabeeinheit zur Zugabe des Reduktionsmittelstoffgemisches zum Abgas;
- Fig. 13: ein Ausführungsbeispiel einer Vorrichtung zum Aufbereiten des Abgases einer Verbrennungskraftmaschine;
- Fig. 14: ein Mittel zum Abscheiden von Tropfen;
- Fig. 15 bis 18: Ausführungsbeispiele von Verdampfereinheiten;
- Fig. 19 und 20: ein weiteres Ausführungsbeispiel einer Vorrichtung zur Bereitstellung eines gasförmigen Stoffgemisches;
- Fig. 21: ein weiteres Ausführungsbeispiel einer Vorrichtung zur Aufbereitung von Abgas;
- Fig. 22: ein Detail eines Mündungsbereichs einer Zugabeeinheit in die Abgasleitung und
- Figs. 23 und 24: Beispiele für Wabenkörper als Katalysatorträgerkörper.

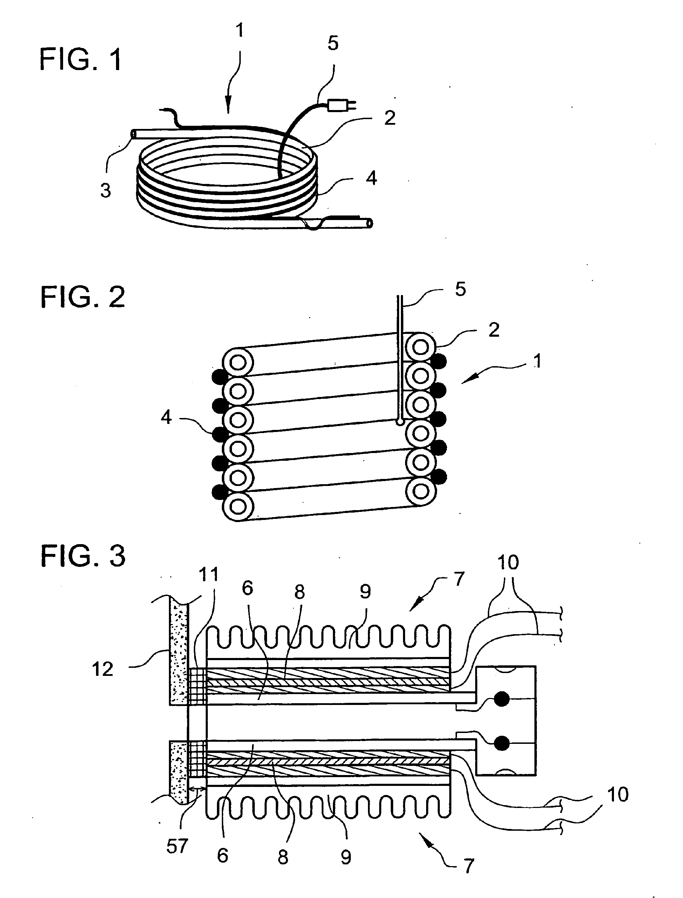

Fig. 1 zeigt schematisch eine Vorrichtung 1 zum Bereitstellen eines gasförmigen Stoffgemisches umfassend mindestens einen der folgenden Stoffe:
a) mindestens ein Reduktionsmittel
b) mindestens einen Reduktionsmittelvorläufer.

Hierbei handelt es sich insbesondere um das Reduktionsmittel Ammoniak und den Reduktionsmittelvorläufer Harnstoff. Die Vorrichtung 1 umfasst eine Zugabeleitung 2 mit Abgabeöffnung 3. Weiterhin sind Mittel 4 zur Aufheizung der Zugabeleitung 2 ausgebildet, mit denen die Zugabeleitung 2 über eine erste kritische Temperatur aufheizbar ist, die größer als die Siedetemperatur von Wasser ist. Die Vorrichtung 1 umfasst weiterhin ein hier noch nicht gezeigtes Reservoir, das mit der Zugabeleitung 2 in strömungstechnische Verbindung bringbar ist. D. h. insbesondere, dass ein im Reservoir gespeichertes Fluid wie beispielsweise eine wässrige Lösung umfassend mindestens einen Reduktionsmittelvorläufer im Betrieb durch die Zugabeleitung 2 hin zur Abgabeöffnung 3 strömen kann. Durch diese Vorrichtung 1 kann ein gasförmiges Stoffgemisch bereitgestellt werden, welches mindestens ein Reduktionsmittel und/oder mindestens einen Reduktionsmittelvorläufer enthält.

Im vorliegenden Ausführungsbeispiel sind die Mittel 4 zur Aufheizung der Zugabeleitung 2 gemeinsam mit dieser spiralförmig aufgewickelt. Dadurch wird ein durch die Zugabeleitung 2 strömendes Fluid aufgeheizt und schlussendlich verdampft. Hierdurch wird durch die Abgabeöffnung 3 ein gasförmiges Stoffgemisch abgegeben, welches zumindest mindestens einen Reduktionsmittelvorläufer enthält. Je nach Wahl der Temperatur der Mittel 4 zur Aufheizung der Zugabeleitung 2 kann sogar bereits eine zumindest teilweise Thermolyse des Reduktionsmittelvorläufers in der Zugabeleitung 2 erfolgen, so dass das durch die Abgabeöffnung abgegebene gasförmige Stoffgemisch neben einem Reduktionsmittelvorläufer wie beispielsweise Harnstoff auch bereits Reduktionsmittel wie beispielsweise Ammoniak enthält.

Weiterhin umfasst die Vorrichtung 1 zum Bereitstellen eines gasförmigen Stoffgemisches auch einen Messfühler 5, mit dem die Temperatur an mindestens einer Stelle der Zugabeleitung 2 gemessen werden kann. Bei dem Messfühler 5 kann es sich beispielsweise um ein übliches Thermoelement oder einen üblichen Thermowiderstand handeln. Die Vorrichtung 1 und/oder die einzelnen Komponenten, die einen elektrischen Anschluss benötigen, umfassen bevorzugt einen Kabelschwanz zur Realisierung der elektrischen Anschlüsse. Unter einem Kabelschwanz wird insbesondere eine Kabelverbindung verstanden, die mindestens einen halben Meter, bevorzugt mindestens einen Meter lang ist. Dies ermöglicht die Ausbildung von Steckkontakten in Bereichen, die insbesondere in Automobilen nur geringen Umwelteinflüssen wie Spritzwasser, Steinschlag oder ähnlichem ausgesetzt sind.

Fig. 2 zeigt die Vorrichtung 1 aus Fig. 1 im Schnitt. Deutlich zu erkennen ist die Zugabeleitung 2, durch die im Betrieb die wässrige Lösung umfassend mindestens einen Reduktionsmittelvorläufer strömen kann sowie die Mittel 4 zur Aufheizung der Zugabeleitung 2. Die Zugabeleitung 2 kann einen konstanten Querschnitt aufweisen, dieser kann jedoch auch wie im vorliegenden Beispiel variabel sein. Der durchströmbare Querschnitt der Zugabeleitung 2 liegt hierbei allerdings bevorzugt zwischen 0,75 mm² und 20 mm², bevorzugt liegt der durchströmbare Querschnitt im Bereich von etwa 3 mm². Diese durchströmbaren Querschnitte haben sich als vorteilhaft erwiesen, da einerseits eine schnelle und im Wesentlichen vollständige, Verdampfung der wässrigen Lösung bei einem solchen Querschnitt möglich ist und andererseits der Querschnitt so groß ist, dass die Bildung von Ablagerungen im Inneren der Zugabeleitung 2 im Wesentlichen vermieden wird. Fig. 2 zeigt auch den Messfühler 5 zur Bestimmung der Temperatur der Zugabeleitung 2.

Hierbei werden die Mittel 4 zur Aufheizung der Zugabeleitung 2 so betrieben, dass im Betrieb die Temperatur über die Länge der Zugabeleitung 2 höchstens 5°C oberhalb und unterhalb einer mittleren Temperatur liegt. Die mittlere Temperatur entspricht dabei im Wesentlichen der ersten kritischen Temperatur. Die Zugabeleitung 2 ist insbesondere aus einer Kupferlegierung ausgebildet.

Fig. 3 zeigt schematisch die Förderleitung 6, über die die Zugabeleitung 2 im Betrieb mit einem hier noch nicht gezeigten Reservoir verbindbar ist. Die Förderleitung 6 weist Mittel 7 zum Temperieren auf. Die Mittel 7 zum Temperieren umfassen in diesem Ausführungsbeispiel jeweils mehrere Peltier-Elemente 8 und einen Kühlkörper 9. Die Peltier-Elemente 8 sind jeweils mit elektrischen Anschlüssen 10 versehen, über die sie mit Strom versorgt werden können. Je nach Polung des Stroms werden dabei die Peltier-Elemente 8 zum Aufheizen oder zum Abkühlen eingesetzt, so dass mit ihnen eine Grundtemperierung der Förderleitung 6 erreicht werden kann. Der Kühlkörper 9 dient insbesondere zum Abstrahlen von Wärmeenergie, wenn durch das bzw. die Peltier-Elemente 8 die Förderleitung 6 gekühlt wird.

Über eine Verbindungseinheit 11 kann die Förderleitung 6 mit einem weiteren Bauteil verbunden werden. Je nach Ausführung der Vorrichtung kann dies entweder die bereits oben bezeichnete Zugabeleitung 2 oder allgemein eine Verdampfereinheit 12 sein. Teil der Verdampfereinheit 12 kann dann die Zugabeleitung 2 sein. Allgemein ist die Verbindungseinheit 11 zumindest teilweise aus einem Material mit einer Wärmeleitfähigkeit von weniger als 10 W/m K (Watt pro Meter und Kelvin) ausgebildet. Die Verbindungseinheit 11 ist insbesondere aus einem keramischen Werkstoff und/oder Polytetrafluorethylen (PTFE) ausgebildet. Die Verbindungseinheit 11 ist insbesondere so aufgebaut, dass über eine Länge 57 der Verbindungseinheit 11 ein Temperaturgradient von 40 K/mm (Kelvin pro Millimeter) und mehr aufrechterhalten werden kann. Dies erlaubt eine Verfahrensführung, bei der die Verdampfereinheit 12 und/oder die Zugabeleitung 2 eine deutlich höhere Temperatur aufweist als die Förderleitung 6. Beispielsweise kann die Verdampfereinheit eine Temperatur von 300°C oder mehr, 400°C oder mehr oder von 420°C oder mehr aufweisen und so zu einer im Wesentlichen vollständigen Verdampfung der wässrigen Lösung innerhalb der Verdampfereinheit 12 führen, während die Förderleitung 6 lediglich ein Temperaturniveau von 70°C oder mehr, 80°C oder mehr, oder 90°C oder mehr aufweist, um zu gewährleisten, dass die wässrige Lösung noch nicht in der Förderleitung 6 verdampft.

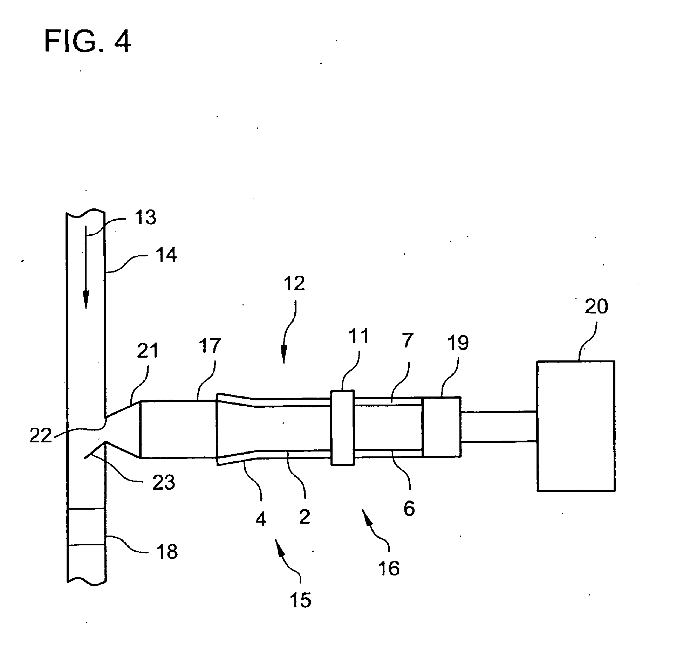

Fig. 4 zeigt schematisch eine Vorrichtung 15 zur Aufbereitung des Abgases 13 einer nicht gezeigten Verbrennungskraftmaschine. Das Abgas 13 der Verbrennungskraftmaschine strömt durch eine Abgasleitung 14. Die Vorrichtung 15 zur Aufbereitung der Gase 13 einer Verbrennungskraftmaschine umfasst einen Reduktionsmittellösungsverdampfer 16, einen Hydrolysekatalysator 17 und einen SCR-Katalysator 18. Im Reduktionsmittellösungsverdampfer 16 wird eine wässrige Lösung umfassend einen Reduktionsmittelvorläufer verdampft. Insbesondere wird als Reduktionsmittelvorläufer Harnstoff verwendet. Der Reduktionsmittellösungsverdampfer 16 umfasst in diesem Ausführungsbeispiel eine Verdampfereinheit 12 umfassend eine durch Mittel 4 zur Aufheizung der Zugabeleitung 2 geheizte Zugabeleitung 2. Diese ist über eine Verbindungseinheit 11 mit einer Förderleitung 6 verbunden. Die Förderleitung 6 ist von Mitteln 7 zum Temperieren der Förderleitung 6 umgeben, die beispielsweise wie oben gezeigt ein oder mehrere Peltier-Elemente 8 und/oder einen Kühlkörper 9 umfassen können. Über Fördermittel 19 kann die wässrige Lösung mindestens eines Reduktionsmittelvorläufers aus einem entsprechenden Reservoir 20 in die Förderleitung 6 gefördert werden. In der Verdampfereinheit 12 wird ein Gas bereitgestellt, welches zumindest einen Reduktionsmittelvorläufer wie beispielsweise Harnstoff und ggf. auch bereits aus der Thermolyse von Harnstoff entstandenen Ammoniak umfasst. Dieses gasförmige Stoffgemisch wird in dem stromabwärts des Reduktionsmittellösungsverdampfers 16 ausgebildeten Hydrolysekatalysator 17 eingeleitet. Der Hydrolysekatalysator 17 ist so ausgebildet, dass durch eine entsprechende auf ihn aufgebrachte katalytisch aktive Beschichtung insbesondere Harnstoff zu Ammoniak hydrolysiert wird. Allgemein dient der Hydrolysekatalysator 17 zur Hydrolyse eines Reduktionsmittelvorläufers zu einem Reduktionsmittel. Das den Hydrolysekatalysator 17 verlassende Gas, welches ein Reduktionsmittel enthält und als Reduktionsmittelstoffgemisch bezeichnet wird, wird über eine Dosierleitung 21 in die Abgasleitung 14 zugegeben. Die Dosierleitung 21 mündet in einer Dosieröffnung in die Abgasleitung 14, die stromaufwärts des SCR-Katalysators 18 liegt. Stromabwärts der Dosieröffnung 22 und stromaufwärts des SCR-Katalysators 18 sind Vermischungsmittel 23 in Form eines Leitblechs ausgebildet, die eine Vermischung des Reduktionsmittelstoffgemisches mit dem Abgas 13 bewirken.

Somit erreicht den SCR-Katalysator 18 eine Mischung aus Reduktionsmittel und Abgas, welches zu einer Reduktion der im Abgas 13 enthaltenen Stickoxide im SCR-Katalysator 18 führt. Bevorzugt wird hierbei eine solche Menge von Reduktionsmittelstoffgemisch bereitgestellt, dass eine möglichst vollständige Umsetzung der Stickoxide im Abgas 13 im SCR-Katalysator 18 erfolgen kann.

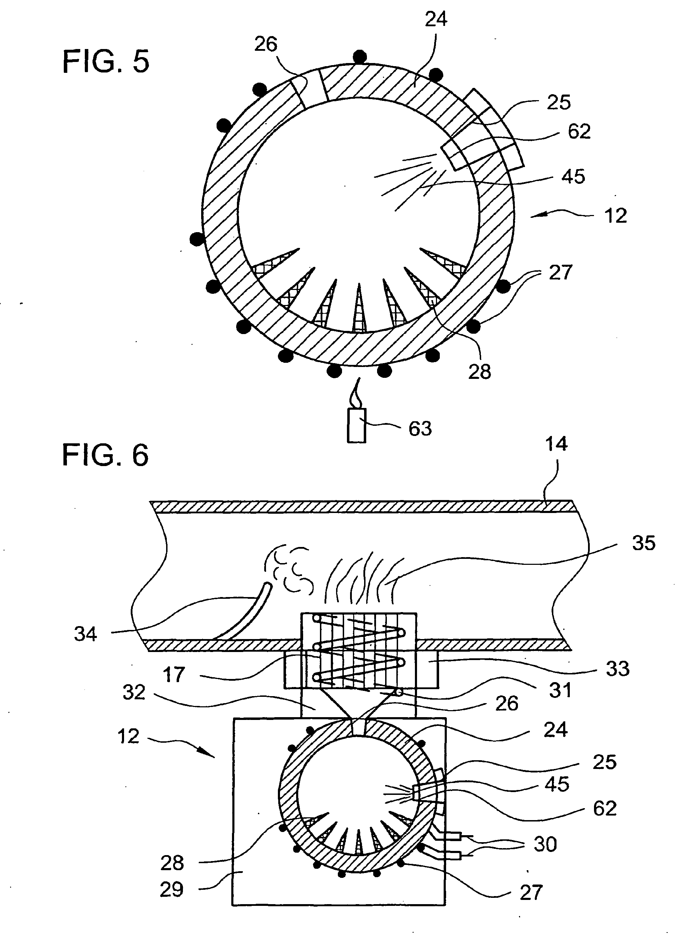

Fig. 5 zeigt schematisch ein weiteres Ausführungsbeispiel einer Verdampfereinheit 12. Diese Darstellung zeigt die Verdampfereinheit 12 im Schnitt. Die Verdampfereinheit 12 umfasst eine Verdampferkammer 24, die ein im Wesentlichen abgeschlossenes Volumen umfasst. In diesem Ausführungsbeispiel weist die Verdampferkammer 24 lediglich eine erste Öffnung 25 zum Anschluss einer hier nicht gezeigten Förderleitung 6 zur Förderung der wässrigen Lösung und eine zweite Öffnung 26 zum Anschluss einer hier nicht gezeigten Zugabeleitung 2 zum Abführen des gasförmigen Stoffgemisches auf. In der ersten Öffnung 25 ist eine Düse 62 als Mittel zum Dosieren der wässrigen Lösung 45 in die Verdampferkammer 24 ausgebildet. Mit dieser Düse 62 wird die wässrige Lösung 45 in die Verdampferkammer 24 zudosiert. Die Verdampfereinheit 12 weist zusätzlich Mittel zur Aufheizung der Verdampferkammer 24 auf. Diese Mittel sind im vorliegenden Ausführungsbeispiel durch entsprechende Heizleiter 27 gebildet, die in Kontakt mit der Verdampferkammer 24 stehen. Wie hier gezeigt kann dieser Heizleiter 27 asymmetrisch ausgebildet sein, d. h. in den Bereichen, die der ersten Öffnung 25 im Wesentlichen gegenüberliegen ist eine größere Dichte von Heizleitern pro Flächeneinheit ausgebildet als in den Bereichen, die nicht im Wesentlichen gegenüber der ersten Öffnung 25 liegen. Weiterhin umfassen diese Mittel hier kumulativ ein Mittel 63 zum Verbrennen von Kohlenwasserstoffen wie beispielsweise einen Brenner. Ein solcher Brenner kann auch geeignet sein, eine flammlose Verbrennung von Kohlenwasserstoffen durchzuführen.

Die Verdampferkammer 24 ist bevorzugt aus einem Werkstoff umfassend mindestens eines der folgenden Materialien ausgebildet: a) Kupfer; b) Aluminium; c) Edelstahl; d) Nickel-Basiswerkstoff und e) Chrom-Nickel-Stahl. Das Volumen der Verdampferkammer 24 beträgt bevorzugt 1,5 bis 10 cm³. Im Betrieb wird der Heizleiter 27 bevorzugt mit einer Heizleistung betrieben, die bei bis zu etwa einem Kilowatt pro Sekunde liegt, wobei die maximale Heizleistung in Abhängigkeit von der Anwendung festgelegt wird. Die maximale Heizleistung liegt bei Personenkraftwagen bevorzugt bei etwa 500 bis 700 W/s, bei Lastkraftwagen bei etwa 1200 bis 1500 W/s. Die Wärmekapazität der Verdampferkammer 24 liegt bevorzugt bei weniger als 120 J/K, besonders bevorzugt bei 100 bis 110 J/K. Die erste Öffnung 25 und die zweite Öffnung 26 schließen bevorzugt einen Winkel von 30 bis 70° ein. Die wässrige Lösung 45 wird bevorzugt mit bis zu 150 ml/min in die Verdampferkammer 24 gefördert, bevorzugt mit bis zu 100 ml/min, besonders bevorzugt mit bis zu 30 ml/min. Bevorzugt weist die Verdampferkammer 24 im Bereich der zweiten Öffnung 26 Mittel auf, mit denen ein Eindringen von Tropfen in die zweite Öffnung 26 vermieden werden kann. Insbesondere handelt es sich hierbei um Mittel, mittels derer eine zwischen dem Tropfen und der Wand der Verdampferkammer 24 liegender Gasfilm durchbrochen werden kann. Insbesondere handelt es sich hierbei um Vorsprünge der Wandungen oder ähnliches. Die Strukturen 28 können ebenfalls in diesem Bereich ausgebildet sein.

Weiterhin weist die Verdampferkammer 24 im Inneren eine oder mehrere Strukturen 28 auf, mittels derer eine größere Oberfläche zur Verdampfung der wässrigen Lösung geschaffen wird. Diese Strukturen 28 sind im vorliegenden Ausführungsbeispiel relativ groß eingezeichnet, es kann sich hierbei aber auch um eine strukturierte Oberfläche handeln, die beispielsweise durch Aufbringung einer entsprechenden Beschichtung auf die innere Oberfläche der Verdampferkammer 24 erreicht werden kann. Alternativ oder zusätzlich können diese Strukturen 28 auch makroskopische Strukturen umfassen, die eine Strukturamplitude von einigen Millimetern oder sogar mehr aufweisen. Allgemein sind diese Strukturen 28 als Mittel zur Erhöhung der Benetzungsfähigkeit der Oberfläche der Verdampferkammer 24 zu verstehen.

Fig. 6 zeigt schematisch das erste Ausführungsbeispiel der Verdampferkammer 24 im Anschluss an eine Abgasleitung 14. Hierbei ist die Verdampferkammer 24 mit einer Ummantelung 29 versehen. Diese Ummantelung 29 wird bevorzugt aus einem entsprechenden thermischen Isolator ausgebildet, welcher Wärmeverluste an die Umgebung reduziert. Die Mittel 27 zur Aufheizung der Verdampferkammer 24 sind über Heizleiteranschlüsse 30 mit einer nicht gezeigten Stromquelle verbindbar.

Über die zweite Öffnung 26 ist die Verdampfereinheit 12 mit einem Hydrolysekatalysator 17 verbunden. Der Hydrolysekatalysator 17 weist Mittel 31 zum Temperieren des Hydrolysekatalysators 17 auf, die im vorliegenden Ausführungsbeispiel aus einem entsprechenden Heizdraht bestehen, mit welchem der Hydrolysekatalysator 17 umwickelt ist. Um den Hydrolysekatalysator 17 herum ist eine entsprechende Ummantelung 32 ausgebildet, die insbesondere eine thermische Isolierung des Hydrolysekatalysators 17 gegenüber der Umgebung darstellt, um auftretende Wärmeverluste möglichst zu minimieren. Im vorliegenden Ausführungsbeispiel ist der Hydrolysekatalysator direkt mit der Abgasleitung 14 verbunden, indem er in diese hineinragt. In der Abgasleitung 14 ist eine entsprechende Bohrung ausgebildet, in die der Hydrolysekatalysator 17 bzw. dessen Ummantelung 32 möglichst dicht eingebracht werden kann. Durch entsprechende Verbindungsmittel 33 kann eine möglichst dichte Verbindung zwischen Hydrolysekatalysator 17 und Abgasleitung 14 hergestellt werden. Weiterhin sind als passive Vermischungsmittel ein Leitblech 34 ausgebildet, mittels dem das den Hydrolysekatalysator 17 verlassende Reduktionsmittelstoffgemisch 35 mit dem in der Abgasleitung 14 strömenden Abgas vermischt wird.

Durch die Verdampfereinheit 12 wird im Betrieb ein gasförmiges Stoffgemisch aus einer wässrigen Lösung hergestellt, die Harnstoff als Reduktionsmittelvorläufer enthält. Das in der Verdampfereinheit 12 entstandene gasförmige Stoffgemisch enthält zumindest Harnstoff und gegebenenfalls auch bereits Ammoniak, welcher durch Thermolyse des entsprechenden Harnstoffs entstanden ist. Dieses Stoffgemisch wird über die zweite Öffnung 26 in den Hydrolysekatalysator 17 geführt, in dem eine im Wesentlichen vollständige Hydrolyse des Harnstoffs zu Ammoniak erfolgt. Hierbei entsteht im Hydrolysekatalysator ein Reduktionsmittelstoffgemisch 35, welches Ammoniak umfasst. Insbesondere ist eine Verfahrensführung bevorzugt, bei der 98 % und mehr des Harnstoffs schlussendlich in Ammoniak umgewandelt werden.

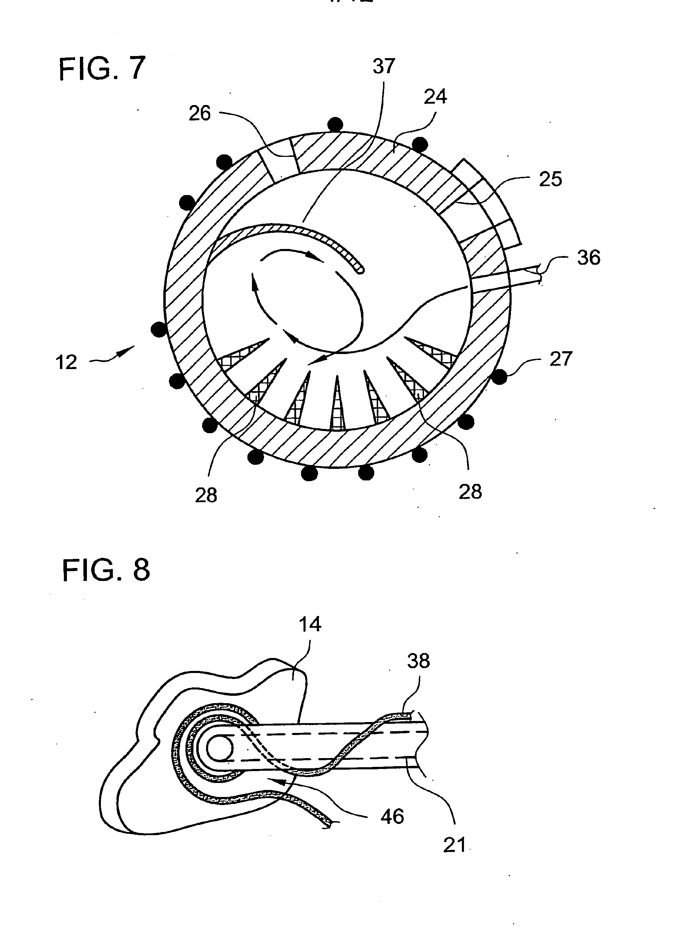

Fig. 7 zeigt schematisch eine alternative Ausgestaltung der Verdampfereinheit aus den Fig. 5 und 6. Im Unterschied zu dem ersten oben gezeigten Ausführungsbeispiel weist dieses zusätzlich eine dritte Öffnung 36. Durch diese dritte Öffnung 36 kann im Betrieb kontinuierlich oder pulsatil Abgas in die Verdampferkammer 24 eingeleitet werden. Hierdurch kann im Vergleich zu dem ersten Ausführungsbeispiel eine bessere Verteilung des Harnstoffs im entstehenden Gas erreicht werden. Zudem lässt sich eine solche Verdampfereinheit 12 auch zur Verdampfung von Festharnstoff einsetzen, da durch die durch die dritte Öffnung 36 eingebrachten Abgase der Verbrennungskraftmaschine Wasser in die Verdampferkammer 24 eingebracht wird, welches später im Hydrolysekatalysator 17 zur Hydrolyse des Harnstoffs zu Ammoniak eingesetzt werden kann.

Fig. 8 zeigt schematisch die Mündung einer Dosierleitung 21 in die Abgasleitung 14 als Teil einer entsprechenden Zugabeeinheit 46. Hierbei ist die Dosierleitung 21 von einem Heizleiter 38 umgeben, welcher auch um die Mündung der Dosierleitung 21 in die Abgasleitung 14 herum ausgebildet ist.

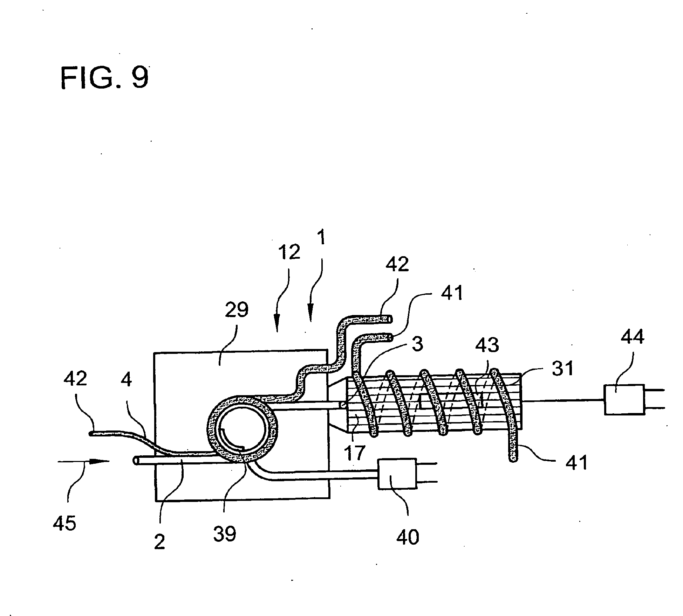

Fig. 9 zeigt schematisch eine weitere Möglichkeit einer Vorrichtung 1 zum Bereitstellen eines ein Reduktionsmittel umfassenden gasförmigen Stoffgemisches in einem ersten Schnittpunkt. Die Vorrichtung 1 umfasst eine Zugabeleitung 2, die mit einem entsprechenden Mittel 4 zur Auffassung der Zugabeleitung 2 umwickelt ist oder mit dieser gemeinsam aufgewickelt ist. Zugabeleitung 2 und Mittel 4 zur Aufheizung der Zugabeleitung 2 sind gemeinsam in einer Ummantelung 29 ausgebildet. Innerhalb der Wicklung der Zugabeleitung 2 ist ein erster Temperaturmessfühler 39 ausgebildet. Dieser erste Temperaturmessfühler 39 ist über ein erstes Verbindungselement 40 mit einer entsprechenden hier nicht gezeigten Steuereinheit verbindbar. Über die Abgabeöffnung 3 der Zugabeleitung 2 ist die Verdampfereinheit 12 mit einem Hydrolysekatalysator 17 verbunden. Der Hydrolysekatalysator 17 weist eine Beschichtung auf, die die Hydrolyse von Harnstoff zu Ammoniak katalysiert. Der Hydrolysekatalysator 17 ist mit Mitteln 31 zur Temperierung des Hydrolysekatalysators umgeben, die einen entsprechend ausgebildeten Heizdraht umfassen. Diese Mittel 31 zur Temperierung des Hydrolysekatalysators 17 können durch entsprechende erste Heizleiter-Anschlüsse 41 mit einer entsprechenden Stromversorgung elektrisch leitend verbunden werden. Entsprechendes gilt für die Mittel 4 zur Aufheizung der Zugabeleitung 2, die über entsprechende zweite Heizleiteranschlüsse 42 mit einer entsprechenden Stromversorgung versehen werden können. Der Hydrolysekatalysator 17 weist einen zweiten Temperaturmessfühler 43 auf, welcher über ein entsprechendes zweites Verbindungselement 44 mit einer nicht gezeigten Steuereinheit verbunden werden kann. Mittels des zweiten Temperaturmessfühlers 43 ist die Temperatur innerhalb oder am Hydrolysekatalysator 17 bestimmbar.

Im Betrieb wird eine wässrige Harnstofflösung 45 in die Zugabeleitung 2 gefördert. Durch die Mittel 4 zur Aufheizung der Zugabeleitung 2 erfolgt eine Aufheizung der Zugabeleitung 2 und damit eine Verdampfung dieser wässrigen Harnstofflösung und ggf. je nach Temperierung zu einer zumindest teilweisen Thermolyse des enthaltenen Harnstoffs zu Ammoniak. Durch die Abgabeöffnung 3 wird das entsprechende Gasförmige Stoffgemisch in den Hydrolysekatalysator 17 gegeben, dem eine Hydrolyse, bevorzugt eine im Wesentlichen vollständige Hydrolyse des umfassten Harnstoffs zu Ammoniak stattfindet. Den Hydrolysekatalysator 17 verlässt ein entsprechendes Reduktionsmittelstoffgemisch 35, welches in einer Abgasleitung 14 des Abgassystems einer Verbrennungskraftmaschine einleitbar ist. Bevorzugt ist hierbei eine Verfahrensführung, bei der durch die Temperaturmessfühler 39, 43 die Temperaturen der Verdampfereinheit 12 und/oder des Hydrolysekatalysators 17 überwacht werden und beide Bauteile 12, 17 über die entsprechenden Mittel 4, 31 beheizbar sind.

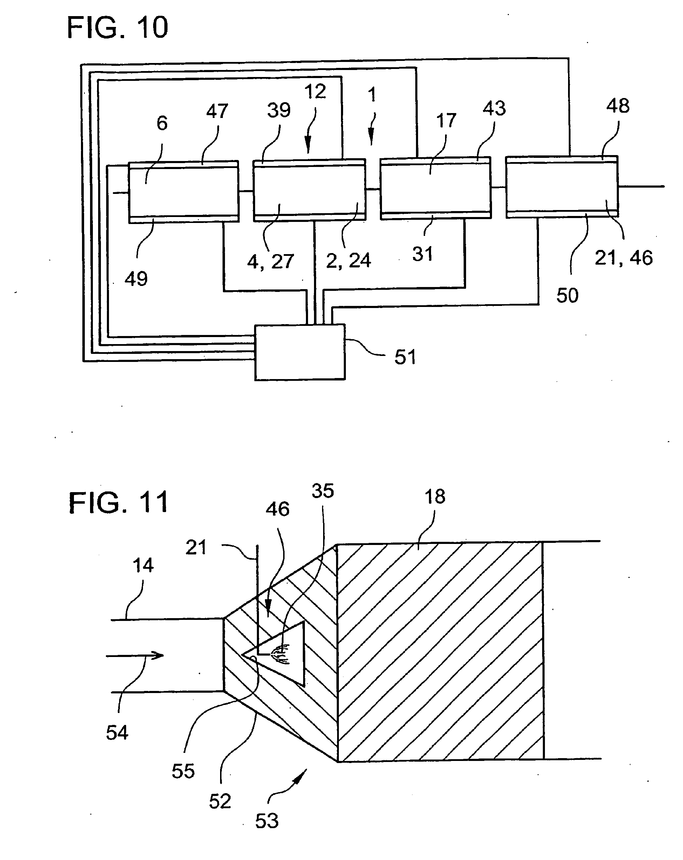

Fig. 10 zeigt schematisch eine Vorrichtung 1 zur Bereitstellung eines gasförmigen Stoffgemisches 35 umfassend mindestens ein Reduktionsmittel. Dieses umfasst sequentiell eine Förderleitung 6, mittels derer eine wässrige Lösung aus einem nicht gezeigten Reservoir in eine Verdampfereinheit 12 gefördert wird. An die Verdampfereinheit 12 schließt sich ein Hydrolysekatalysator 17 und an diesen eine Dosierleitung 21 zur Zugabe des entsprechenden Stoffgemisches zu einer nicht gezeigten Abgasleitung 14 oder eine Zugabeeinheit 46 zur Zugabe des Reduktionsmittelstoffgemisches an die Abgasleitung 14 an. Die Verdampfereinheit 12 weist einen dritten Temperaturmessfühler 47 auf. Mit diesem dritten Temperaturmessfühler 47 kann die Temperatur der oder in der Förderleitung 6 gemessen werden. Optional weist die Dosierleitung 21 und/oder die Zugabeeinheit 46 einen vierten Temperaturmessfühler 48 auf, mit dem die Temperatur der Dosierleitung 21 und/oder der Zugabeeinheit 46 oder die Temperatur in der Dosierleitung 21 und/oder der Zugabeeinheit 46 bestimmt werden kann. Die Verdampfereinheit 12 weist Mittel 4 zur Aufheizung der Zugabeleitung 2 und/oder Mittel 27 zur Aufheizung der Verdampferkammer 24 auf. Der Hydrolysekatalysator 17 kann optional oder als Alternative und/oder als Zusatz zu den Mitteln 4, 27 Mittel 31 zur Temperierung des Hydrolysekatalysators 17 aufweisen. Optional, alternativ und/oder zusätzlich weist die Förderleitung 6 Temperiermittel 49 auf, mittels derer die Förderleitung 6 temperiert werden kann. Insbesondere sind hier ein oder mehrere Peltier-Elemente möglich, vorteilhaft und erfindungsgemäß. Die Dosierleitung 21 und/oder die Zugabeeinheit 46 weisen Zugabetemperiermittel 50 auf, mittels derer die Dosierleitung 21 und/oder die Zugabeeinheit 46 temperiert werden kann. Auch hier ist der Einsatz mindestens eines Peltier-Elementes vorteilhaft.

Sämtliche ausgebildete Temperiermittel 4, 27, 31, 49, 50 und sämtliche ausgebildete Temperaturmessfuhler 39, 43, 47, 48 sind mit einer Steuereinheit 51 verbunden. Mittels dieser Steuereinheit 51 erfolgt eine Regelung der Temperatur in einem Regelkreises, welcher mindestens ein Mittel 4, 27, 31, 49, 50 zum Temperieren und mindestens einen Temperaturmessfühler 39, 43, 47, 48 umfasst. Bevorzugt ist die Zahl der Temperaturmessfühler 39, 43, 47, 48 größer als die Zahl der Mittel 4, 27, 31, 49, 50 zum Temperieren der Bauteile 6, 2, 24, 17, 21, 46. Die Steuereinheit 51 ist bevorzugt mit einer Steuerung der Verbrennungskraftmaschine verbunden oder in diese integriert. Die Daten der Steuerung der Verbrennungskraftmaschine und die Betriebsparameter der Verbrennungskraftmaschine können in vorteilhafter Weise bei der Steuerung der Verdampfung und/oder der Förderung zu der Verdampfungseinheit 12 berücksichtigt werden.

Fig. 11 zeigt schematisch einen Ausschnitt aus einer Vorrichtung zur Bereitstellung eines gasförmigen Stoffgemisches. In einer Abgasleitung 14 ist vor einem SCR-Katalysator 18 ein Wabenkörper 52 mit für ein Fluid durchströmbaren Kanälen ausgebildet, welcher Teil eines entsprechenden Vermischungsmittels 53 ist. Der Wabenkörper 52 ist so ausgebildet, dass das Abgas diesen zumindest zum Teil in einem Winkel zur Hauptströmungsrichtung des Abgases durchströmen kann. Die Hauptströmungsrichtung 54 wird dabei durch einen entsprechenden Pfeil in Fig. 11 angedeutet. Im vorliegenden Ausführungsbeispiel ist der Wabenkörper 52 konisch ausgebaut. Der Wabenkörper weist insbesondere eine größere Aussparung 55 auf, die frei von Kanälen ist. In diese Aussparung 55 mündet die Dosierleitung 21 als Teil der Zugabeeinheit 46 durch die im Betrieb das Reduktionsmittelstoffgemisch 35 eingegeben wird.

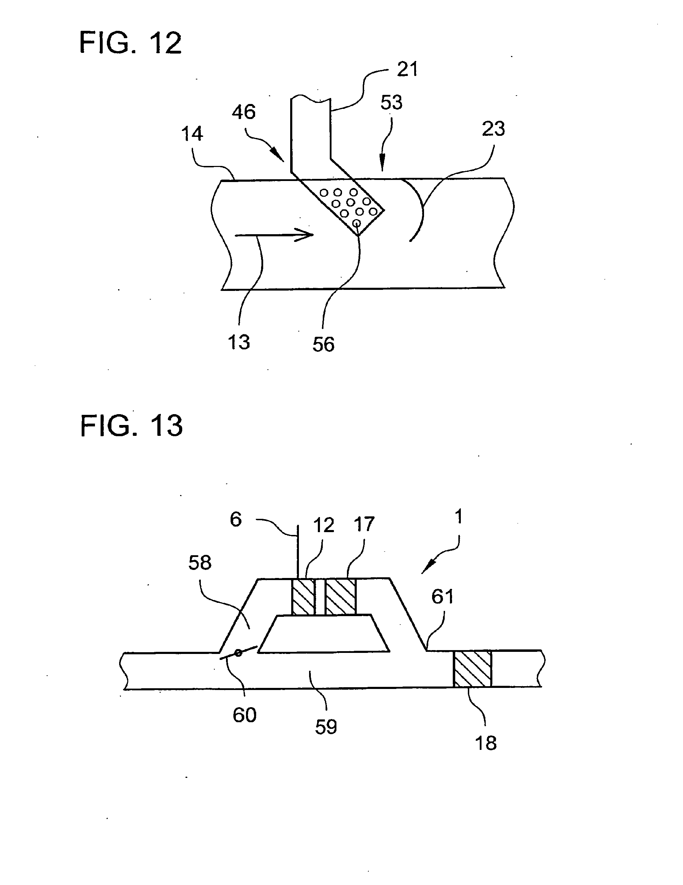

Fig. 12 zeigt schematisch ein Beispiel einer Zugabeeinheit 46 mit einer Dosierleitung 21 zur Zugabe des Reduktionsmittelstoffgemisches in eine Abgasleitung 14. Hierbei durchdringt die Dosierleitung 21 die Wandung der Abgasleitung 14 in einem gekrümmten Zustand. Die Dosierleitung 21 weist in dem Bereich, welcher in die Abgasleitung 14 hineinragt, Perforationen 56 auf. Hierbei ist die Krümmung bzw. der gekrümmte Eintritt der Dosierleitung 21 in die Abgasleitung 14 nicht zwingend, genauso gut könnte die Dosierleitung 21 auch senkrecht bzw. gerade in die Abgasleitung 14 eintreten. Zusätzlich ist hier ein Leitblech 23 ausgebildet, welches zu einer weiter verbesserten Vermischung des Reduktionsmittelstoffgemisches mit dem Abgas 13 in der Abgasleitung 14 führt.

Fig. 13 zeigt schematisch eine Ausgestaltung der Vorrichtung 1 zur Aufbereitung eines Abgases einer nicht gezeigten Verbrennungskraftmaschine. In einem ersten Abgasstrang 58 sind hierbei die Verdampfungseinheit 12 und der Hydrolysekatalysator 17 ausgebildet. Über ein Mittel 60 zur Strömungsleitung wird eine Verteilung des Abgases auf den ersten 58 und einen zweiten Abgasstrang 59 erreicht. Stromabwärts der Einmündung 61 des ersten Abgasstrangs 58 in den zweiten Abgasstrang 59 ist der SCR-Katalysator 18 ausgebildet.

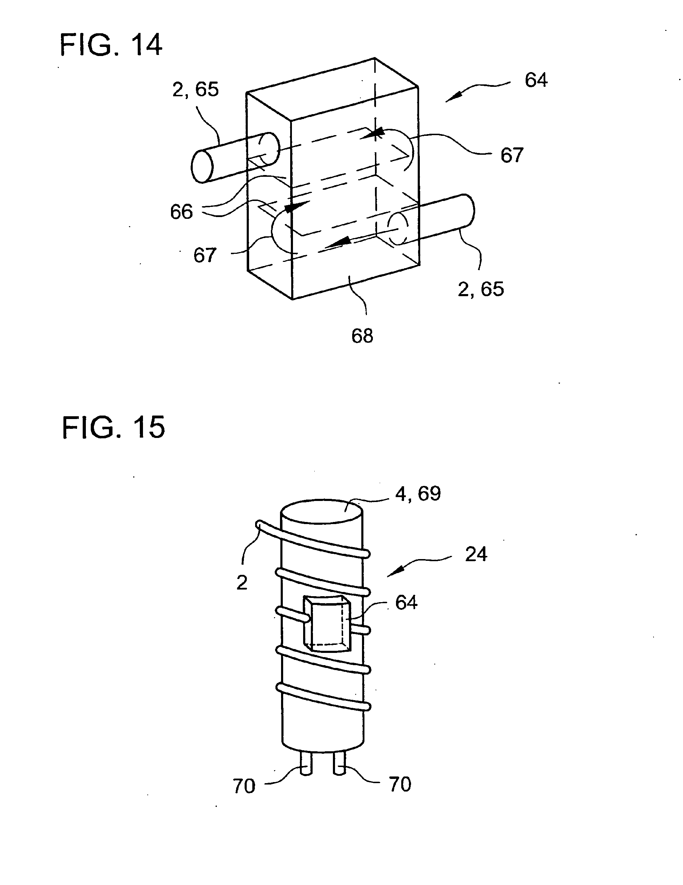

Bevorzugt weist die Verdampfereinheit 12 Mittel 64 zum Abscheiden von Tropfen auf, die beispielsweise innerhalb der Zugabeleitung 2 oder in oder nach der zweiten Öffnung 26 der Verdampferkammer 24 ausgebildet sein können. Fig. 14 zeigt ein Ausführungsbeispiel eines solchen Mittels 64 zum Abscheiden von Tropfen. Dieses Mittel 64 ist mit der Zugabeleitung 2 oder allgemein einer Leitung 65 verbunden, durch die Dampf tritt. Sollten noch Tropfen in dem Dampf vorhanden sein, werden diese im vorliegenden Beispiel durch Trägheitswirkung abgeschieden. In dem Mittel 64 sind eine oder mehrere Prallplatten 66 ausgebildet, die den Strom zu Umlenkungen 67 zwingen. Prallplatte 66 und/oder das Gehäuse 68 des Mittels 64 sind beheizt, so dass abgeschiedene Tropfen ebenfalls verdampft werden. Statt dem hier gezeigten Mittel 64 zum Abscheiden von Tropfen können andere Maßnahmen alternativ oder kumulativ getroffen werden, beispielsweise kann die Zugabeleitung 2 oder die Leitung 65 bereichsweise verengte Querschnitte, Vorsprünge, Umlenkungen oder ähnliches aufweisen.

Fig. 15 zeigt schematisch ein weiteres Ausführungsbeispiel einer Verdampfereinheit 12, bei der eine Zugabeleitung 2 durch Mittel 4 zum Beheizen der Zugabeleitung 2 beheizbar sind. Die Mittel 4 zum Beheizen der Zugabeleitung 2 umfassen hier ein stabförmiges Heizelement 69, welches über elektrische Anschlüsse 70 mit einer Stromquelle verbindbar ist. In der Zugabeleitung 2 ist ein Mittel 64 zum Abscheiden von Tropfen ausgebildet, welches über den Kontakt zu dem stabförmigen Heizelement 69 beheizbar ist

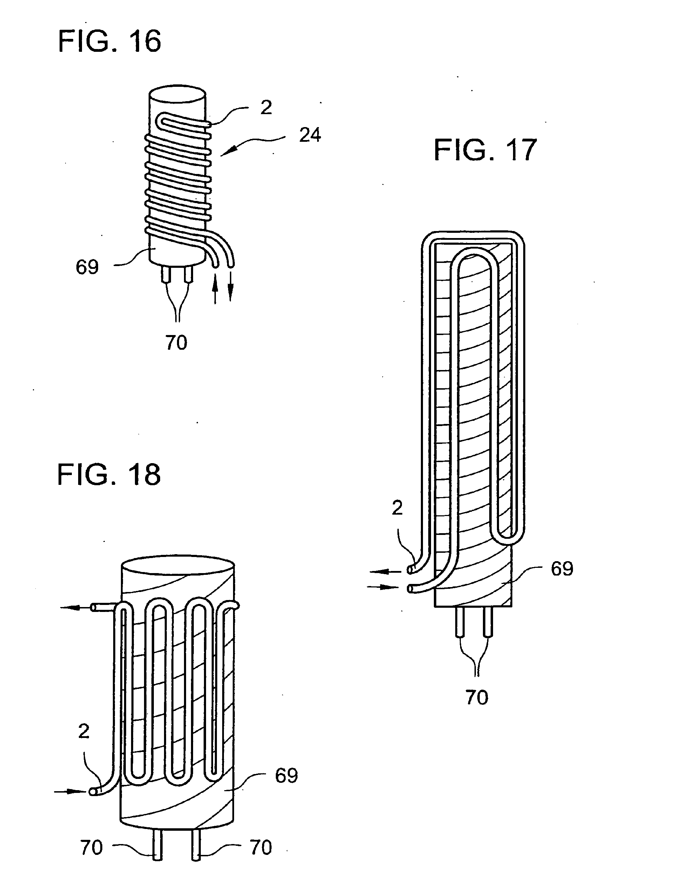

Fig. 16 zeigt schematisch ein weiteres Ausführungsbeispiel einer Verdampfereinheit 12, bei der die Zugabeleitung 2 in Form einer Schlaufe zweimal um das stabförmige Heizelement 69 gewickelt ist.

Fig. 17 und 18 zeigen Ausführungsbeispiele von Verdampfereinheiten 12, bei denen die Zugabeleitung 2 nicht um die Längsachse des stabförmigen Heizelementes 69 gewickelt ist sondern in Schlaufen an dem stabförmigen Heizelement 69 befestigt ist. Grundsätzlich ist eine stoffschlüssige Verbindung zwischen Zugabeleitung 2 und stabförmigem Heizelement 69 bevorzugt, insbesondere eine Hartlötverbindung ("brazed connection").

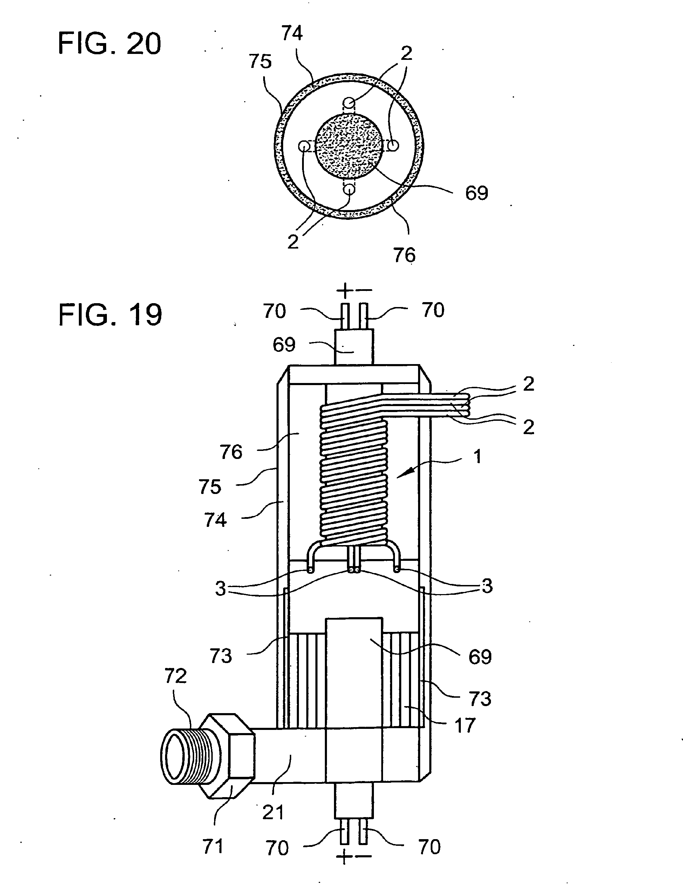

Fig. 19 und 20 zeigen schematisch ein weiteres Ausführungsbeispiel einer Vorrichtung 1 zum Bereitstellen eines gasförmigen Stoffgemisches umfassend mindestens einen der folgenden Stoffe: a) ein Reduktionsmittel, bevorzugt Ammoniak, und b) mindestens einen Reduktionsmittelvorläufer, insbesondere Harnstoff mit einem Hydrolysekatalysator 17. Die Vorrichtung 1 umfasst mindestens einen Zugabeleitung 2, im vorliegenden Ausführungsbeispiel vier Zugabeleitungen 2, die spiralförmig um ein stabförmiges Heizelement 69 gewickelt sind. Jede der Zugabeleitungen 2 weist jeweils eine Abgabeöffnung 3 auf, durch die im Betrieb ein gasförmiges Stoffgemisch abgegeben wird, welches ein Reduktionsmittel umfasst. Die Abgabeöffnungen 3 sind jeweils so verteilt, dass sie auf einem Kreis im Wesentlichen gleich verteilt sind. Die Zugabeleitungen 2 sind mit einem hier nicht gezeigten Reservoir 20 verbunden, aus welchem mittels einem Fördermittel 19 eine wässrige Lösung 45 mindestens eines Reduktionsmittelvorläufers in die Zugabeleitung 2 gefördert wird. Zugabeleitungen 2 und Heizelement 69 sind Teil eines entsprechenden Reduktionsmittellösungsverdampfers 16.

Stromabwärts der Abgabeöffnungen 3 ist ein Hydrolysekatalysator 17 ausgebildet, der ebenfalls von einem stabförmigen Heizelement 69 beheizt werden kann. In einer vorteilhaften Weiterbildung ist nur ein stabförmiges Heizelement 69 ausgebildet, welches sowohl mit der oder den Zugabeleitungen 2 als auch mit dem Hydrolysekatalysator 17 in wärmetechnischem Kontakt steht. Der Hydrolysekatlysator 17 ist im vorliegenden Ausführungsbeispiel als ringförmiger Wabenkörper ausgeführt. Stromabwärts des Hydrolysekatalysators 17 schließt sich eine Dosierleitung 21 an, über die im Betrieb der Gasstrom umfassend mindestens ein Reduktionsmittel in die Abgasleitung 14 geführt werden kann. Über die Verbindungsmittel 71 ist eine mechanische Verbindung zur Abgasleitung 14 herstellbar. Weiterhin ist eine thermische Isolierung 72 ausgebildet, mittels der der Hydrolysekatalysator 17 thermisch von der Abgasleitung 14 abgekoppelt wird. Weiterhin ist ein Wärmeschild 73 ausgebildet, mittels dem der Hydrolysekatalysator 17 vor einer Abstrahlung von Wärme geschützt wird. Weiterhin ist eine Lufstpaltisolierung 74 zwischen einem Außengehäuse 75 und einem Innengehäuse 76 ausgebildet, die ebenfalls der thermischen Isolierung dient.

Fig. 20 zeigt einen Querschnitt durch im Bereich der Zugabeleitungen 2, die rings um das stabförmige Heizelement 69 zu erkennen sind.

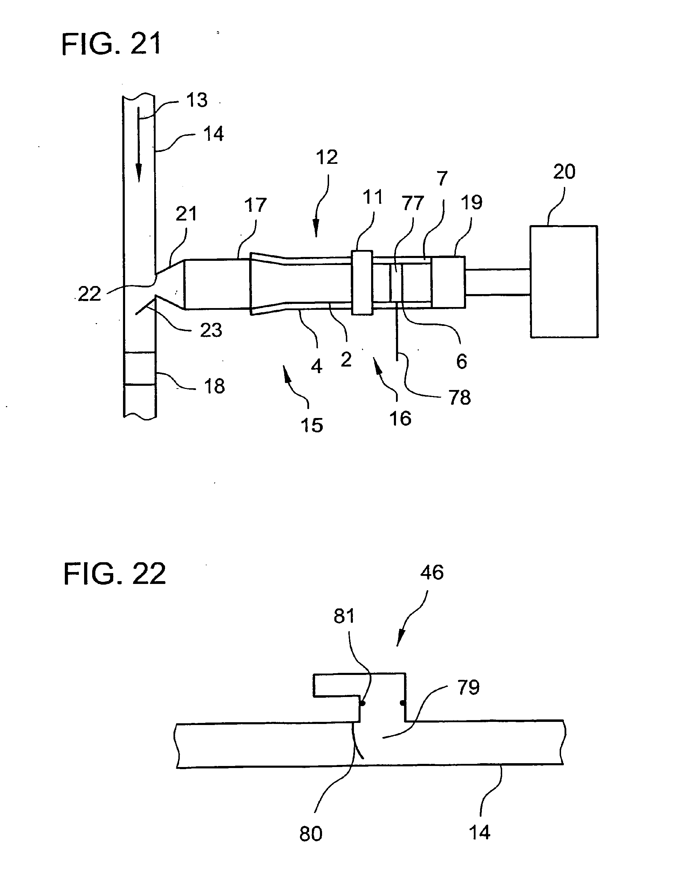

Fig. 21 zeigt schematisch ein weiteres Ausführungsbeispiel einer Vorrichtung 15 zur Aufbereitung von Abgas 13. Im Unterschied zu der Ausführungsform in Fig. 4 ist in der Förderleitung 6 ein Ventil 77 ausgebildet, welches zum Dosieren der wässrigen Lösung 45 in die Verdampfereinheit 12 dient. Das Ventil 77 ist über einen Steueranschluss 78 ansteuerbar.

Fig. 22 zeigt schematisch einen Mündungsbereich 79 einer Zugabeeinheit 46 in die Abgasleitung 14. Die Abgasleitung 14 und/oder die Zugabeeinheit weist hier eine Blende 80 auf, die im Betrieb im Mündungsbereich 79 eine Tot- oder Beruhigungszone der Abgasströmung und mithin einen Bereich mit verringertem Druck schafft und somit dafür sorgt, dass kein Abgas in die Zugabeeinheit 46 gedrückt wird. Die Zugabeeinheit 46 weist weiterhin einen Temperatursensor 81 auf, der einen ringförmig ausgebildeten Thermowiderstand umfasst Sollten sich in diesem Bereich Ablagerungen bilden, so kann der Temperatursensor 81 mit einer Stromquelle (nicht gezeigt) verbunden werden, um so durch Erhöhung der Temperatur auf eine zweite Solltemperatur, beispielsweise von 600°C oder 800°C eine Auflösung oder Verringerung der Ablagerungen bewirken.

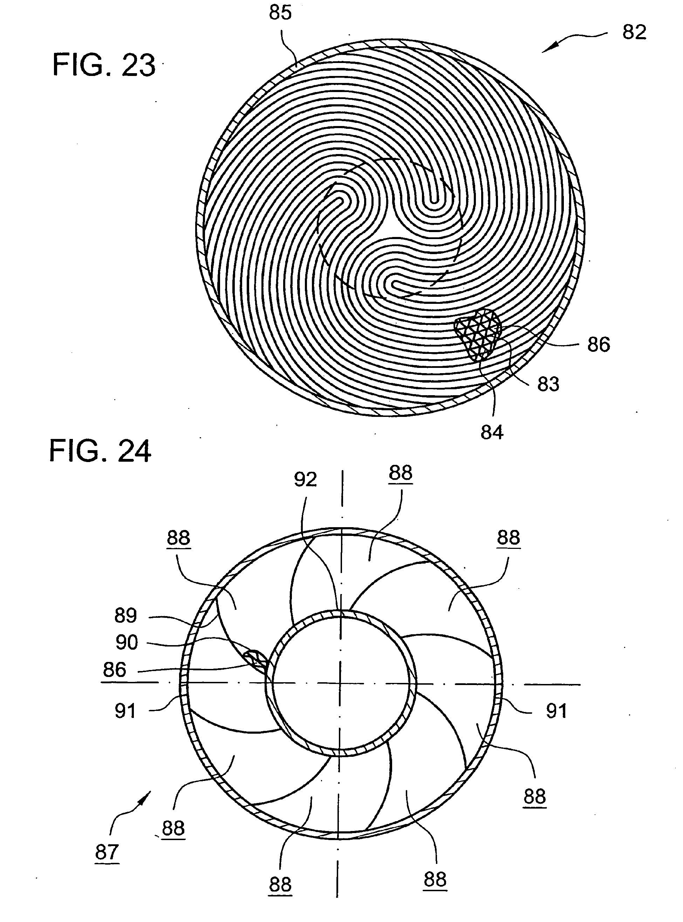

Fig. 23 zeigt schematisch einen Querschnitt eines Wabenkörpers 82, der sowohl als Hydrolysekatalysator 17 als auch als SCR-Katalysator 18 eingesetzt werden kann, wobei hierbei andere katalytisch aktive Beschichtungen aufgetragen werden müssen. Der Wabenkörper 82 ist aus glatten metallischen Lagen 83 und gewellten metallischen Lagen 84 aufgebaut, die in diesem Ausführungsbeispiel zu drei Stapeln geschichtet und dann miteinander verwunden wurden. Der Wabenkörper 82 umfasst ferner ein Mantelrohr 85, welches den Wabenkörper 82 nach außen abschließt. Glatte 83 und gewellte Lagen 84 bilden Kanäle 86, die für Abgas 13 durchströmbar sind.

Fig. 24 zeigt ein weiteres Beispiel eines Wabenkörpers 87, der ringförmig ausgebildet ist und sowohl als Hydrolysekatalysator 17 als auch als SCR-Katalysator 18 einsetzbar ist, wobei hierbei andere katalytisch aktive Beschichtungen aufgetragen werden müssen. Der Wabenkörper 87 ist aus Lagen 88 ausgebildet, die glatte 89 und gewellte Abschnitte 90 aufweisen, die aufeinander gefalten sind und Kanäle 86 bilden, die für Abgas 13 durchströmbar sind Der Wabenkörper 87 ist durch ein äußeres Mantelrohr 91 und ein inneres Mantelrohr 92 abgeschlossen.

Insbesondere bei einer durch Mittel 4, 69 beheizten Zugabeleitung 2 ist es grundsätzlich vorteilhaft, neben einer einseitigen Beheizung auch eine Beheizung von der anderen Seite vorzusehen. So können weitere hülsenförmige Heizelemente ausgebildet sein, die von außen die Zugabeleitung umschließen. Grundsätzlich ist es vorteilhaft, wenn an einem bestimmten Querschnitt der Zugabeleitung 2 sich im Betrieb sich die Temperatur über den Umfang höchstens um +25°C oder -25°C von einer mittleren Temperatur unterscheidet.

Als Hydrolysekatalysator 17 ist grundsätzlich auch ein mit einer die Hydrolyse insbesondere von Harnstoff zu Ammoniak katalysierenden Beschichtung versehenes Rohr oder aber ein Mantelrohr mit mindestens einer innen am Außenumfang angebrachten strukturierten metallischen Lage, die bevorzugt einen frei durchströmbaren Querschnitt radial in ihrem Inneren aufweist, der mindestens 20% des Gesamtquerschnitts des Mantelrohrs beträgt. Diese Ausführungsformen werden bevorzugt von außen beheizt.

Grundsätzlich wird vor dem Beginn der Bereitstellung von Reduktionsmittel vor dem SCR-Katalysator 18 bevorzugt wie folgt verfahren:
- Zunächst wird geprüft, ob eine Stromversorgung oder Brennstoffversorgung für die vorhandenen Temperier- und/oder Aufheizmittel 4, 27, 31, 49, 50, 63, 69 gesichert ist;
- wenn festgestellt wird, dass die Strom- und/oder Brennstoffversorgung gesichert ist, dann wird die Verdampfereinheit 12 und gegebenenfalls der Hydrolysekatalysator 17 auf jeweils eine vorbestimmte Solltemperatur aufgeheizt, insbesondere eine Zugabeleitung 2 auf etwa 360 bis 400°C und/oder eine Verdampferkammer 24 auf etwa 250 bis 350°C; parallel wird wässrige Lösung 45 bis zur Verdampfereinheit 24, insbesondere bis zur Verbindungseinheit 11 gefördert, wobei einerseits ein Volumen an wässriger Lösung 45 gefördert werden kann, welches im Wesentlichen dem Volumen der Förderleitung 6 entspricht und andererseits an entsprechender Stelle, beispielsweise an, in oder benachbart zur Verbindungseinheit 11 ein entsprechender Sensor, beispielsweise basierend auf einer Leitfähigkeitsmessung, ausgebildet werden kann;
- dann wird die Temperatur des SCR-Katalysators 18 bzw. der Abgasleitung 14 bestimmt, insbesondere gemessen und/oder aus den Daten einer Motorsteuerung berechnet.

Liegt die Temperatur des SCR-Katalysators 18 über einem vorgebbaren Grenzwert, der insbesondere der Starttemperatur ("light off-Temperatur) des SCR-Katalysators 18 liegt, wird die Verdampfereinheit 12 mit der wässrigen Lösung 45 beschickt. Haben die Verdampfungseinheit 12, die Zugabeleitung 2 und/oder die Verdampferkammer 24 noch im wesentlichen ihre Betriebstemperatur, so können die oben angegebenen Diagnoseschritte unterbleiben.

Im Betrieb wird die in die Verdampfereinheit 12 eingebrachte Heizleistung mit der Fördermenge an wässriger Lösung 45 korreliert. Insbesondere bedeutet dies, dass geprüft wird, was für eine Soll-Heizleistung für die Verdampfung der jeweiligen Fördermenge benötigt wird. Liegt die gemessene Ist-Heizleistung für eine Zeitspanne unterhalb der Soll-Heizleistung, so wird eine Warnung an den Benutzer ausgegeben, da dann eine Reduzierung des Querschnitts der Zugabeleitung 2 und/oder der Dosierleitung 21 vorliegen kann.

Weiterhin ist es vorteilhaft, in regelmäßigen, vorgebbaren Zeitabständen die Verdampfereinheit 12, die Zugabeleitung 2, die Verdampferkammer 24, den Hydrolysekatalysator 17, die Dosierleitung 21 und/oder die Zugabeeinheit 46 auf eine Temperatur aufzuheizen, die über der normalen Betriebstemperatur liegt, um so gegebenenfalls vorhandene Ablagerungen aufzulösen.

Beim Beenden der Verdampfung, die beispielsweise dann erfolgt, wenn die Verbrennungskraftmaschine abgestellt wird, kann eine Rückförderung der wässrigen Lösung 45 aus der Zugabeleitung 2 erfolgen. Bevorzugt wird vor Rückförderung aus der Zugabeleitung 2 zunächst die Förderung von wässriger Lösung 45 eingestellt werden, wobei jedoch weiterhin die Verdampfereinheit 12, die Zugabeleitung 2 und/oder die Verdampferkammer 24 auf übliche Temperatur beheizt wird, um so eine vollständige Verdampfung durchzuführen und so zu verhindern, dass bei der Rückförderung auch eventuelle Verunreinigungen in der Verdampfereinheit 12, der Zugabeleitung 2 und/oder der Verdampferkammer 24 in die Förderleitung 6 gelangen. Nach Verstreichen einer gewissen Zeit kann dann die Rückförderung durch die Fördermittel 19 initiiert werden. Vorteilhafter Weise ist an der Verbindungseinheit 11 oder benachbart zu dieser ein Ventil ausgebildet, mittels welchem Luft bei der Rückförderung ansaugbar ist. Grundsätzlich wird rückgefördert, bis die Förderleitung 6 im Wesentlichen in das Reservoir 20 entleert ist.

Bei starken Änderungen der Fördermenge der zu fördernden wässrigen Lösung 45, die beispielsweise auf einer stark ansteigenden Konzentration von Stickoxiden im Abgas der Verbrennungskraftmaschine zurückzuführen sein kann können Situationen eintreten, dass die Verdampfungseinheit 12 nicht in der Lage ist, plötzlich eine deutlich größere Menge an wässriger Lösung 45 zu verdampfen, da die entsprechend erhöhte Aufheizung nicht so schnell erfolgen kann. In diesem Falle ist es bevorzugt, die Fördermenge an wässriger Lösung 45 nur so zu erhöhen, dass gerade noch eine vollständige Verdampfung möglich ist.

Die Menge an zuzugebendem Reduktionsmittel und folglich auch die Menge an zu verdampfender wässriger Lösung 45 kann in Abhängigkeit beispielsweise von mindestens einer der folgenden Bedingungen bestimmt werden:
a) der Stickoxidkonzentration im Abgas;
b) einer prognostizierten Stickoxidgeneration, die bevorzugt dann vorliegt, wenn das Abgas den SCR-Katalysator 18 passiert;
c) der maximalen Menge an Reduktionsmittel, die gerade vom SCR-Katalysator 18 umgesetzt werden kann.

Reservoir 20, Förderleitung 6, Verdampfereinheit 12, Zugabeleitung 2, Verdampferkammer 24 und/oder Hydrolysekatalysator 17 können in thermischem Kontakt beispielsweise zum Kraftstofftank der Verbrennungskraftmaschine ausgebildet sein. Dieser weist üblicherweise aus Frostschutzgründen eine Heizung auf, die dann auch Frostschutz für die oben angegebenen Bauteile bieten kann.

Gemäß einem weiteren vorteilhaften Aspekts wird eine Vorrichtung 1 zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Hierbei ist ein Reservoir 20 für eine wässrige Lösung 45 umfassend mindestens einen Reduktionsmittelvorläufer ausgebildet, das mit einer Verdampferkammer 24 in strömungstechnische Verbindung bringbar ist. Weiter ist ein Mittel zum Dosieren der wässrigen Lösung 45 in die Verdampferkammer 24 ausgebildet, wobei Mittel 27, 63 zur Aufheizung der Verdampferkammer 24 ausgebildet sind, mit denen die Verdampferkammer 24 auf eine Temperatur größer oder gleich einer kritischen Temperatur aufheizbar ist, bei der die wässrige Lösung zumindest teilweise verdampft. Gemäß einer vorteilhaften Weiterbildung dieser Vorrichtung 1 umfassen die Mittel zum Dosieren der wässrigen Lösung 45 mindestens eine Düse 62. Vorteilhafter Weise hat die Verdampferkammer 24 ein im Wesentlichen abgeschlossenes Volumen, welches lediglich eine erste Öffnung 25 zum Anschluss einer Förderleitung 6 für die wässrige Lösung 45 und eine zweite Öffnung 26 zum Anschluss einer Zugabeleitung 2 zum Abführen des gasförmigen Stoffgemisches aufweist. Gemäß einer vorteilhaften Weiterbildung dieser Vorrichtung 1 umfasst die Verdampferkammer 24 ein im Wesentlichen abgeschlossenes Volumen, welches lediglich eine erste Öffnung 25 zum Anschluss einer Förderleitung 6 für die wässrige Lösung, eine zweite Öffnung 26 zum Anschluss einer Zugabeleitung 2 zum Abführen des gasförmigen Stoffgemisches und eine dritte Öffnung 36 zur Zugabe von Abgas 14 aufweist.

Eine weitere vorteilhafte Weiterbildung dieser Vorrichtung sieht vor, dass die Mittel 27, 63 zur Aufheizung der Verdampferkammer 24 mindestens eines der folgenden Bauteile umfassen:
a) eine elektrische Widerstandsheizung 27 und
b) ein Mittel 63 zum Verbrennen eines Kraftstoffes.

Weiterhin ist es vorteilhaft, dass die Verdampferkammer 24 im Wesentlichen kugelsymmetrisch ist. Bevorzugt weist die Verdampferkammer 24 dabei einen Radius von 2 mm bis 25 mm auf. Weiter ist vorteilhaft, dass die Verdampferkammer 24 ein Volumen von 30 bis 4000 mm³ aufweist. Die Mittel 27, 63 zur Aufheizung der Verdampferkammer können eine Heizleistung von bis zu 5 kW aufbringen. Weiterhin ist vorteilhafter Weise eine Förderleitung 6 zur Förderung der wässrigen Lösung 45 ausgebildet, die die Verdampferkammer 24 mit einem Reservoir 20 verbindet und bei der ein Fördermittel 19 ausgebildet ist, mittels dessen ein Fluid durch die Förderleitung 6 förderbar ist. Gemäß einer weiteren vorteilhaften Ausgestaltung dieser Vorrichtung ist diese so ausgebildet, dass im Betrieb die Temperatur der Verdampferkammer 24 höchstens 25°C oberhalb und unterhalb einer mittleren Temperatur liegt. Weiterhin ist es vorteilhaft, dass die Verdampferkammer 24 zumindest in Teilbereichen Mittel 28 zur Erhöhung der Benetzungsfähigkeit der Oberfläche aufweist: Dies kann insbesondere eine Strukturierung der inneren Oberfläche (Vorsprünge oder ähnliches) der Verdampferkammer 24 umfassen.

Weiterhin wird ein Verfahren zum Bereitstellen eines gasförmigen Stoffgemisches umfassend mindestens einen der folgenden Stoffe:
a) mindestens ein Reduktionsmittel und
b) mindestens einen Reduktionsmittelvorläufer
beschrieben. Eine wässrige Lösung 45 mindestens eines Reduktionsmittelvorläufers wird in eine Verdampferkammer 24 gefördert, wobei die Verdampferkammer 24 so beheizt wird, dass die wässrige Lösung 45 vollständig zu dem gasförmigen Stoffgemisch verdampft. Dieses Verfahren kann vorteilhafter Weise dadurch fortgebildet werden, dass die Verdampferkammer 24 ein im Wesentlichen abgeschlossenes Volumen umfasst, welches lediglich eine erste Öffnung 25 zum Anschluss einer Förderleitung 6 für die wässrige Lösung 45 und eine zweite Öffnung 26 zum Anschluss einer Zugabeleitung 2 zum Abführen des gasförmigen Stoffgemisches aufweist.

Alternativ dazu kann die Verdampferkammer 24 ein im Wesentlichen abgeschlossenes Volumen umfassen, welches lediglich eine erste Öffnung 25 zum Anschluss einer Förderleitung 6 für die wässrige Lösung 45, eine zweite Öffnung 26 zum Anschluss einer Zugabeleitung 2 zum Abführen des gasförmigen Stoffgemisches und eine dritte Öffnung 36 zur Zugabe von Abgas 14 aufweist.

Vorteilhaft können diese Verfahren dadurch weitergebildet werden, dass die Aufheizung geregelt erfolgt. Insbesondere wird die Verdampferkammer 24 auf eine mittlere Temperatur von 250 bis 300°C aufgeheizt. Weiterhin ist es vorteilhaft, dass die Verdampferkammer 24 so auf eine mittlere Temperatur aufgeheizt wird, dass an keinem Punkt der Verdampferkammer 24 die Temperatur um mehr als +25°C oder -25°C von einer mittleren Temperatur abweicht.

Weiterhin wird eine Vorrichtung 15 zur Aufbereitung des Abgases einer Verbrennungskraftmaschine beschrieben. Diese umfasst zumindest einen Reduktionsmittellösungsverdampfer 16, einen mit dem Reduktionsmittellösungsverdampfer 16 verbundenen Hydrolysekatalysator 17 zur Hydrolyse von insbesondere Harnstoff zu Ammoniak und einen SCR-Katalysator 18 zur selektiven katalytischen Reduktion von Stickoxiden (NOx). Der Reduktionsmittellösungsverdampfer 16 umfasst eine Verdampfereinheit 12 zum Bereitstellen eines gasförmigen Stoffgemisches umfassend mindestens einen der folgenden Stoffe:
a) mindestens einen Reduktionsmittelvorläufer und
b) ein Reduktionsmittel.

Mit der Verdampfereinheit 12 ist eine wässrige Lösung 45 umfassend mindestens einen Reduktionsmittelvorläufer verdampfbar. Der SCR-Katalysator 18 ist in der Abgasleitung 14 ausgebildet, wobei der Reduktionsmittellösungsverdampfer 16 und der Hydrolysekatalysator 17 außerhalb der Abgasleitung 14 und mit dieser verbindbar ausgebildet sind.

Diese Vorrichtung 15 kann in vorteilhafter Weise weitergebildet werden, indem eine Förderleitung 6 zur Verbindung der Verdampfereinheit 12 mit einem Reservoir 20 für die wässrige Lösung 45 verbunden ist. Hierbei sind Förderleitung 6 und Verdampfereinheit 12 durch eine Verbindungseinheit 11 miteinander verbunden. Diese Verbindungseinheit 11 ist zumindest teilweise aus einem Material mit einer Wärmeleitfähigkeit von weniger als 10 W/m K (Watt pro Meter und Kelvin), bevorzugt von weniger als 2 W/m K, besonders bevorzugt von weniger als 1 W/m K, insbesondere von 0,2 W/m K. Weiterhin ist es vorteilhaft, dass die Verbindungseinheit 11 aus mindestens einem Werkstoff ausgebildet ist, der aus mindestens einem der folgenden Materialien aufgebaut ist:
a) ein keramischer Werkstoff
b) Polytetrafluorethylen (PTFE).

Weiterhin ist es vorteilhaft, dass die Verbindungseinheit 11 so aufgebaut ist, dass über eine Länge der Verbindungseinheit 11 ein Temperaturgradient von 40 K/mm (Kelvin pro Millimeter) und mehr aufrechterhalten werden kann. Weiterhin weist der Hydrolysekatalysator 17 eine Wärmekapazität von höchstens 60 J/K (Joule pro Kelvin) auf. Das Volumen des Hydrolysekatalysators 17 liegt bei 100 ml und weniger.

Der Hydrolysekatalysator umfasst bevorzugt ein Mantelrohr, wobei das Mantelrohr bei der Bestimmung der oben angegebenen Wärmekapazität nicht berücksichtigt wird. In dem Mantelrohr ist bevorzugt mindestens eine zumindest teilweise strukturierte metallische Lage ausgebildet. Bevorzugt ist im inneren Bereich ein freier Bereich ohne Ausbildung von zumindest teilweise strukturierten Lagen vorgesehen, der mindestens 20 oder sogar 50 Flächen-% der Querschnittsfläche des Mantelrohres umfasst.

Der Hydrolysekatalysator 17 hat vorteilhafter Weise eine Zelldichte von weniger als 600 cpsi (cells per squareinch), bevorzugt von 400 cpsi und weniger, besonders bevorzugt von 300, 200 oder 100 cpsi und weniger. Bevorzugt ist der Hydrolysekatalysator 17 mechanisch mit der Abgasleitung 14 verbunden. Bevorzugt ist der Hydrolysekatalysator 17 thermisch von der Abgasleitung 14 entkoppelt. Gemäß einer weiteren vorteilhaften Ausgestaltung dieser Vorrichtung 15 ist mindestens ein stabförmiges Heizelement 69 ausgebildet, mit welchem mindestens eines der folgenden Bauteile beheizbar ist:
a) der Hydrolysekatalysator 17 und
b) zumindest Teile der Verdampferkammer 24.

Weiterhin ist es vorteilhaft, dass mindestens eines der folgenden Bauteile temperierbar ist:
a) zumindest Teile der Förderleitung 6;
b) der Hydrolysekatalysator 17;
c) zumindest Teile der Verdampfereinheit 12;
d) eine Dosierleitung 21 zur Zugabe des entstehenden Ammoniaks zum Abgassystem; und
e) eine Zugabeeinheit 46, mit der der Hydrolysekatalysator 17 mit der Abgasleitung 14 verbindbar ist.

Weiterhin ist es vorteilhaft, dass Mittel 4, 7, 27, 31, 49, 50 zum Temperieren ausgebildet sind, die mindestens eines der folgenden Bauteile umfassen:
a) einen Heizdraht;
b) ein Peltier-Element 8;
c) einen Kühlkörper 9;
d) ein stabförmiges Heizelement 69 und
e) ein Mittel 63 zum Verbrennen eines Kraftstoffes.

Weiterhin ist es vorteilhaft, dass mindestens eines der folgenden Bauteile eine die Hydrolyse von Harnstoff katalysierende Beschichtung aufweist:
a) zumindest Teile der Verbindungseinheit 11;
b) zumindest Teile einer Zugabeleitung 2 zur Zugabe des gasförmigen Stoffgemisches zum Hydrolysekatalysator 17;
c) zumindest Teile der Verdampfereinheit 12;
d) zumindest Teile einer Dosierleitung 21 zur Zugabe des entstehenden Reduktionsmittels zum Abgassystem, und
e) zumindest Teile einer Zugabeeinheit 46, mit der der Hydrolysekatalysator 17 mit der Abgasleitung 14 verbindbar ist.

Weiterhin ist es vorteilhaft, dass eine Zugabeeinheit 46 ausgebildet ist, mittels der der Hydrolysekatalysator 17 in strömungstechnische Verbindung mit einer Abgasleitung 14 der Verbrennungskraftmaschine bringbar ist. Insbesondere umfasst die Zugabeeinheit 46 ein passives Vermischungsmittel, mit welchem die einbringbaren Stoffe mit dem Abgas mischbar sind. Das Vermischungsmittel umfasst bevorzugt mindestens eines der folgenden Bauteile:
a) ein Leitblech 34 und
b) einen Wabenkörper 52, der so ausgestaltet ist, dass das Abgas 13 diesen zumindest zum Teil in einem Winkel zur Hauptströmungsrichtung 45 des Abgases durchströmen kann.

Vorteilhafter Weise weist der Wabenkörper 52 für ein Fluid durchströmbare Kanäle und Durchbrechungen auf, die benachbarte Kanäle miteinander verbinden.

In einer vorteilhaften Weiterbildung dieser Vorrichtung 15 ist mindestens eines der folgenden Bauteile:
a) die Zugabeeinheit 46 und
b) die Abgasleitung 14
so ausgebildet, dass im Betrieb der Mündungsbereich der Zugabeeinheit 46 in die Abgasleitung 14 einer strömungstechnisch Beruhigungs- oder Totzone bildet.

Gemäß einer weiteren vorteilhaften Ausgestaltung dieser Vorrichtung 15 ist stromabwärts des Hydrolysekatalysators 17 eine thermische Isolierung 72 ausgebildet. Diese thermische Isolierung 72 ist bevorzugt unmittelbar anschließend an dem Hydrolysekatalysator 17 ausgebildet.

Gemäß einer weiteren vorteilhaften Ausgestaltung dieser Vorrichtung 15 umfasst mindestens eines der folgenden Bauteile mindestens einen Temperatursensor:
a) die Zugabeeinheit 46;
b) der Hydrolysekatalysator 17;
c) der SCR-Katalysator 18;
d) die Verdampfereinheit 12;
e) die Zugabeleitung 2;
f) die Verdampferkammer 24 und
g) eine Dosierleitung 21 zur Zugabe des entstehenden Reduktionsmittels zur Abgasleitung 14.

Bevorzugt ist dieser Temperatursensor mit einer Stromversorgung verbindbar, so dass er auch zum Aufheizen des entsprechenden Bauteils a) bis g) Einsatz finden kann.

Gemäß einer weiteren vorteilhaften Ausgestaltung dieser Vorrichtung 15 ist ein Fördermittel 19 ausgebildet, mittels welchem die wässrige Lösung 45 aus einem Reservoir zu der Verdampfereinheit 24 förderbar ist. Das Fördermittel 19 umfasst bevorzugt mindestens eine Pumpe, bevorzugt eine Dosierpumpe. Gemäß einer vorteilhaften Ausgestaltung kann die Pumpe einen Förderdruck aufbauen, der größer als der höchstmögliche Abgasdruck im Betrieb der Verbrennungskraftmaschine an der Zugabeeinheit 46 und/oder der Dosierleitung 21 ist. Gemäß einer weiteren vorteilhaften Ausgestaltung der Vorrichtung 15 ist zwischen Fördermittel 19 und Verdampfereinheit 12 mindestens ein Ventil zum Dosieren der wässrigen Lösung 45 ausgebildet.

Weiterhin soll hier ein vorteilhaftes Verfahren zur Aufbereitung des Abgases einer Verbrennungskraftmaschine beschrieben werden. Das Verfahren umfasst zumindest die folgenden Schritte:
a) Bereitstellen mindestens eines der folgenden Stoffe:
   a1) Reduktionsmittel
   a2) mindestens einen Reduktionsmittelvorläufer umfassendes gasförmiges Stoffgemisch
b) Hydrolyse des mindestens einen Reduktionsmittelvorläufers, wobei ein Reduktionsmittelstoffgemisch 35 erhalten wird;
c) Beaufschlagen eines SCR-Katalysators 18 mit dem Reduktionsmittelstoffgemisch 35 und dem Abgas 14 zur mindestens teilweisen selektiven katalytischen Reduktion von im Abgas umfassten Stickoxiden (NOx).

Nach Schritt b) erfolgt eine Mischung des Reduktionsmittelstoffgemisches 35 mit zumindest Teilen des Abgases 14.

Vorteilhaft kann dieses Verfahren dadurch weitergebildet werden, dass in Schritt a) eine Verdampfung einer wässrigen Lösung 45 umfassend mindestens einen Reduktionsmittelvorläufer in einer Verdampfereinheit 12 erfolgt. Weiterhin ist es bevorzugt, dass Schritt b) zumindest teilweise in einem Hydrolysekatalysator 17 erfolgt.

Gemäß einer vorteilhaften Ausgestaltung dieses Verfahrens wird die Temperatur mindestens eines der folgenden Bauteile geregelt:
a) zumindest von Teilen der Verdampfereinheit 12;
b) des Hydrolysekatalysators 17;
c) einer Förderleitung 6 zum Fördern der wässrigen Lösung 45 zu der Verdampfereinheit 12;
d) eine Zugabeleitung 2 zur Zugabe des gasförmigen Stoffgemisches zum Hydrolysekatalysator 17;
e) eine Dosierleitung 21 zur Zugabe des entstehenden Reduktionsmittels zum Abgassystem; und
f) eine Zugabeeinheit 46, mittels der der Hydrolysekatalysator 17 in strömungstechnische Verbindung mit einer Abgasleitung 14 der Verbrennungskraftmaschine bringbar ist.

Hierbei wird diese Verbindung stromaufwärts des SCR-Katalysators 18 ausgebildet. Weiterhin ist es vorteilhaft, dass mindestens eines der folgenden Bauteile temperiert wird:
a) zumindest Teile der Verdampfereinheit 12;
b) der Hydrolysekatalysator 17;
c) eine Förderleitung 6 zum Fördern der wässrigen Lösung 45 zu einer Verdampfereinheit 12;
d) eine Zugabeleitung 2 zur Zugabe des gasförmigen Stoffgemisches zum Hydrolysekatalysator 17;
e) eine Dosierleitung 21 zur Zugabe des entstehenden Reduktionsmittels zum Abgassystem und
f) eine Zugabeeinheit 46, mittels der der Hydrolysekatalysator 17 in strömungstechnische Verbindung mit einer Abgasleitung 14 der Verbrennungskraftmaschine bringbar ist.

Eine weitere Ausgestaltung dieses Verfahrens umfasst die Förderung der wässrigen Lösung 45 durch eine Förderleitung 6 zum Reduktionsmittellösungsverdampfer 16. Hierbei ist es vorteilhaft, wenn die wässrige Lösung 45 durch die Förderleitung 6 rückförderbar ist. Gemäß einer weiteren vorteilhaften Ausgestaltung dieses Verfahrens werden bis zu 2,5 ml der wässrigen Lösung 45 binnen einer Sekunde verdampft.

Gemäß einer weiteren vorteilhaften Ausgestaltung dieses Verfahrens wird vor Beginn einer Temperierungsmaßnahme die Temperatur an mindestens einem der folgenden Bauteile:
a) dem Hydrolysekatalysator 17;
b) der Verdampfereinheit 12;
c) einer Dosierleitung 21 zur Zugabe des entstehenden Reduktionsmittels zur Abgasleitung 14; und
d) einer Zugabeeinheit 46, mittels der der Hydrolysekatalysator 17 in strömungstechnische Verbindung mit einer. Abgasleitung 14 der Verbrennungskraftmaschine bringbar ist
bestimmt und mit mindestens einer weiteren Temperatur eines anderen Bauteils abgeglichen. Gemäß einer Weiteren vorteilhaften Ausgestaltung dieses Verfahrens wird die Verdampfung der wässrigen Lösung 45 nur durchgeführt, wenn der Temperaturabgleich ergibt, dass die bestimmte Temperatur und die Temperatur des anderen Bauteils sich höchstens um einen vorgebbaren Differenzwert unterscheiden.

Die erfindungsgemäße Vorrichtung 1 und das erfindungsgemäße Verfahren erlauben in vorteilhafter Weise die vollständige Verdampfung einer wässrigen Lösung umfassend Harnstoff und anschließende Hydrolyse zu einem Stoffgemisch umfassend Ammoniak. Dieses Stoffgemisch wird in vorteilhafter Weise als Reduktionsmittel zu einem SCR-Katalysator 18 zugegeben. Die Ausführung der Verdampfung außerhalb des Abgassystems erlaubt die Ausbildung von deutliche kleineren Hydrolysekatalysatoren 17, so dass die erfindungsgemäße Vorrichtung platzsparend und kostensparend im Vergleich zu üblichen Vorrichtungen zum Bereitstellen eines Reduktionsmittels für die selektive katalytische Reduktion von Stickoxiden ist.

### Bezugszeichenliste

- 1: Vorrichtung zum Bereitstellen eines gasförmigen Stoffgemisches
- 2: Zugabeleitung
- 3: Abgabeöffnung
- 4: Mittel zur Aufheizung der Zugabeleitung
- 5: Messfühler
- 6: Förderleitung
- 7: Mittel zum Temperieren
- 8: Peltier-Element
- 9: Kühlkörper
- 10: Elektrischer Anschluss
- 11: Verbindungseinheit
- 12: Verdampfereinheit
- 13: Abgas
- 14: Abgasleitung
- 15: Vorrichtung zur Aufbereitung des Abgases einer Verbrennungskraftmaschine
- 16: Reduktionsmittellösungsverdampfer
- 17: Hydrolysekatalysator
- 18: SCR-Katalysator
- 19: Fördermittel
- 20: Reservoir
- 21: Dosierleitung
- 22: Dosieröffung
- 23: Vermischungsmittel
- 24: Verdampferkammer
- 25: Erste Öffnung
- 26: Zweite Öffnung
- 27: Mittel zur Aufheizung der Verdampferkammer
- 28: Struktur
- 29: Ummantelung der Verdampfereinheit
- 30: Heizleiteranschluss
- 31: Mittel zur Temperierung des Hydrolysekatalysators
- 32: Ummantelung des Hydrolysekatalysators
- 33: Verbindungsmittel
- 34: Leitblech
- 35: Reduktionsmittelstoffgemisch
- 36: Dritte Öffnung
- 37: Leitstruktur
- 38: Heizleiter
- 39: Erster Temperaturmessfühler
- 40: Verbindungselement
- 41: Erster Heizleiteranschluss
- 42: Zweiter Heizleiteranschluss
- 43: Zweiter Temperaturmessfühler
- 44: Zweites Verbindungselement
- 45: Wässrige Lösung
- 46: Zugabeeinheit
- 47: Dritter Temperaturmessfühler
- 48: Vierter Temperaturmessfühler
- 49: Temperiermittel
- 50: Zugabetemperiermittel
- 51: Steuereinheit
- 52: Wabenkörper
- 53: Vermischungsmittel
- 54: Hauptströmungsrichtung
- 55: Aussparung
- 56: Perforation
- 57: Länge
- 58: erster Abgasstrang
- 59: zweiter Abgasstrang
- 60: Mittel zur Strömungsleitung
- 61: Einmündung
- 62: Düse
- 63: Mittel zum Verbrennen von Kohlenwasserstoffen
- 64: Mittel zum Abscheiden von Tropfen
- 65: Leitung
- 66: Prallplatte
- 67: Umlenkung
- 68: Gehäuse
- 69: Stabförmiges Heizelement
- 70: elektrischer Anschluss
- 71: Verbindungsmittel
- 72: Thermische Isolierung
- 73: Wärmeschild
- 74: Luftspaltisolierung
- 75: Außengehäuse
- 76: Innengehäuse
- 77: Ventil
- 78: Steueranschluss
- 79: Mündungsbereich
- 80: Blende
- 81: Temperatursensor
- 82: Wabenkörper
- 83: glatte metallische Lage
- 84: gewellte metallische Lage
- 85: Mantelrohr
- 86: Kanal
- 87: ringförmiger Wabenkörper
- 88: Lage
- 89: glatter Bereich
- 90: gewellter Bereich
- 91: äußeres Mantelrohr
- 92: inneres Mantelrohr

## Patentansprüche

1. Vorrichtung (1) zum Bereitstellen eines gasförmigen Stoffgemisches umfassend mindestens einen der folgenden Stoffe:
a) mindestens ein Reduktionsmittel umfassend Ammoniak und
b) mindestens einen Reduktionsmittelvorläufer umfassend Harnstoff,
wobei ein Reservoir (20) für eine wässrige Lösung (45) umfassend mindestens einen Reduktionsmittelvorläufer ausgebildet ist, aus dem wässrige Lösung (45) mittels eines Fördermittels (19) in mindestens eine Zugabeleitung (2) mit Abgabeöffnung (3) förderbar ist, wobei Mittel (4) zur Aufheizung der Zugabeleitung (2) ausgebildet sind,
**dadurch gekennzeichnet, dass**
mit den Mitteln (4) die mindestens eine Zugabeleitung (2) auf eine Temperatur über einer kritischen Temperatur von mehr als 300 Grad Celsius aufheizbar ist, wobei die kritische Temperatur größer als die Siedetemperatur von Wasser ist und wobei die Vorrichtung (1) so ausgebildet ist, dass im Betrieb die Temperatur über die Länge der Zugabeleitung (2) höchstens 25 Grad Celsius oberhalb und unterhalb einer mittleren Temperatur liegt.

2. Vorrichtung nach Anspruch 1, bei der die Zugabeleitung (2) innenseitig eine Oberflächenrauhigkeit R_{z} von 8 bis 12 Mikrometern aufweist.

3. Vorrichtung nach einem der vorhergehenden Ansprüche, bei der die Zugableitung (2) aus einem Werkstoff mit einem Wärmeleitungskoeffizienten von mehr als 200 W/m K (Watt pro Meter und Kelvin) ausgebildet ist.

4. Vorrichtung nach einem der vorhergehenden Ansprüche, bei der die Zugabeleitung (2) mindestens einen Richtungswechsel um 90° oder mehr aufweist.

5. Vorrichtung nach einem der vorhergehenden Ansprüche, bei der die Mittel (4) zur Aufheizung mindestens eines der folgenden Elemente umfassen:
a) eine elektrische Widerstandsheizung;
b) Wärmeübertragungsmittel zur Nutzung der Abwärme mindestens eines anderen Bauteils;
c) mindestens ein Peltier-Element und
d) ein Mittel zur Verbrennung eines Kraftstoffes.

6. Vorrichtung nach einem der vorhergehenden Ansprüche, bei der
- die Zugabeleitung (2) in engen Wicklungen von einem Heizleiter (38) umgeben ist,
oder bei der
- die Zugabeleitung (2) und ein Heizleiter (38) gemeinsam zu einer Spirale aufgewickelt sind,
wobei bevorzugt eine stoffschlüssig Verbindung zwischen Heizleiter und Zugabeleitung existiert.

7. Vorrichtung nach einem der vorhergehenden Ansprüche, bei der die Zugabeleitung (2) aus einem Material umfassend Aluminium ausgebildet ist.

8. Vorrichtung nach einem der vorhergehenden Ansprüche, bei der die Zugabeleitung eine Wärmekapazität von mindestens 150 J/K (Joule pro Kelvin) aufweist.

9. Vorrichtung nach einem der vorhergehenden Ansprüche, bei der die Zugabeleitung (2) zumindest teilweise mit einer die Hydrolyse eines Reduktionsmittelvorläufers zu einem Reduktionsmittel katalysierenden Beschichtung versehen ist.

10. Vorrichtung nach einem der vorhergehenden Ansprüche, bei der Zugabeleitung (2) und ein Hydrolysekatalysator (17) in einem gemeinsamen beheizbaren Gehäuse ausgebildet sind.

11. Verfahren zum Bereitstellen eines gasförmigen Stoffgemisches umfassend mindestens einen der folgenden Stoffe:
a) mindestens ein Reduktionsmittel umfassend Ammoniak und
b) mindestens einen Reduktionsmittelvorläufer umfassend Harnstoff,
wobei eine wässrige Lösung (45) mindestens eines Reduktionsmittelvorläufers aus einem Reservoir (20) in eine Zugabeleitung (2) gefördert wird, wobei die Zugabeleitung (2) beheizt wird,
**dadurch gekennzeichnet, dass**
die Zugabeleitung (2) auf eine Temperatur über einer kritischen Temperatur von mehr als 300 Grad Celsius so beheizt wird, dass die wässrige Lösung (45) vollständig zu dem gasförmigen Stoffgemisch verdampft, und weiter
die Temperatur über eine Länge der Zugabeleitung (2) höchstens 25 Grad Celsius oberhalb oder unterhalb einer mittleren Temperatur liegt.

12. Verfahren nach Anspruch 11, bei dem die Temperaturen in der Zugabeleitung (2) bei einer mittleren Temperatur zwischen 380°C und 450°C liegen.

13. Verfahren nach einem der Ansprüche 11 bis 12, bei dem die Zugabeleitung (2) mindestens eine Richtungsänderung um mindestens 90° aufweist.

14. Verfahren nach einem der Ansprüche 11 bis 13, bei dem die Zugabeleitung (2) auf eine zweite Temperatur geheizt wird, die grö-βer als die kritische Temperatur ist, bei der eine vollständige Verdampfung der wässrigen Lösung (45) erfolgt.

15. Verfahren nach einem der Ansprüche 11 bis 14, bei dem die Aufheizung der Zugabeleitung (2) über eine elektrische Widerstandsheizung durchgeführt und vor Beginn der Aufheizung der Widerstand dieser Widerstandsheizung bestimmt wird und in Abhängigkeit von dem ermittelten Widerstand eine Aufheizung der Zugabeleitung (2) erfolgt.

## Claims

1. Device (1) for providing a gaseous substance mixture comprising at least one of the following substances:
a) at least one reducing agent comprising ammonia and
b) at least one reducing agent precursor comprising urea solution,
with a reservoir (20) for an aqueous solution (45) comprising at least one reducing agent precursor being formed, from which reservoir (20) aqueous solution (45) can be delivered into at least one metering line (2) with a dispensing opening (3) by a delivery means (19), wherein means (4) for heating the metering line (2) are formed,
**characterized in that**
by means (4) the at least one metering line (2) can be heated to a temperature above a critical temperature of more than 300 degree Celsius which is greater than the boiling temperature of water and wherein the device (1) is constructed such that, in operation, the temperature across the length of the metering line (2) is at most 25 degrees Celsius above and below a mean temperature.

2. Device according to Claim 1, in which the metering line (2) has, at the inside, a surface roughness R_{z} of 8 to 12 micrometers.

3. Device according to one of the preceding claims, in which the metering line (2) is formed from a material with a thermal conductivity of greater than 200 W/m K (Watts per meter and Kelvin).

4. Device according to one of the preceding claims, in which the metering line (2) has at least one change in direction by 90° or more.

5. Device according to Claim 1, in which the means (4) for heating comprise at least one of the following elements:
a) an electrical resistance heater;
b) heat transfer means for utilizing the waste heat of at least one other component;
c) at least one Peltier element and
d) a means for burning a fuel.

6. Device according to one of the preceding claims, in which
- the metering line (2) is surrounded by closely-wound windings of a heat conductor (38),
or in which
- the metering line (2) and a heat conductor (38) are wound together to form a spiral,
wherein preferably a materially-joined connection exists between the heat conductor and the metering line.

7. Device according to one of the preceding claims, in which the metering line (2) is formed from a material comprising aluminum.

8. Device according to one of the preceding claims, in which the metering line has a heat capacity of at least 150 J/K (Joule per Kelvin).

9. Device according to one of the preceding claims, in which the metering line (2) is at least partially provided with a coating which catalyzes the hydrolysis of a reducing agent precursor to form a reducing agent.

10. Device according to one of the preceding claims, in which the metering line (2) and a hydrolysis catalytic converter (17) are formed in a common, heatable housing.

11. Method for providing a gaseous substance mixture comprising at least one of the following substances:
a) at least one reducing agent comprising ammonia and
b) at least one reducing agent precursor comprising urea,
with an aqueous solution (45) of at least one reducing agent precursor being delivered from a reservoir (20) into a metering line (2), wherein the metering line (2) is heated
**characterized in that**
the metering line (2) is heated to a temperature above a critical temperature of more than 300 degree Celsius in such a way that the aqueous solution (45) is completely evaporated to form the gaseous substance mixture and further the temperature along a length of the metering line (2) is at most 25 degrees Celsius above or below a mean temperature.

12. Method according to Claim 11, in which the temperatures in the metering line (2) are at a mean temperature between 380°C and 450°C.

13. Method according to one of Claims 11 to 12, in which the metering line (2) has at least one change in direction by at least 90°.

14. Method according to one of Claims 11 to 13, in which the metering line (2) is heated to a second temperature which is higher than the critical temperature at which complete evaporation of the aqueous solution (45) takes place.

15. Method according to one of Claims 11 to 14, in which the heating of the metering line (2) is carried out by means of an electrical resistance heater, with the resistance of said resistance heater being determined before the start of heating, and the heating of the metering line (2) taking place as a function of the determined resistance.

## Revendications

1. Dispositif (1) pour mettre à disposition un mélange de substances gazéiformes, comprenant au moins une des substances suivantes :
a) au moins un agent de réduction comprenant de l'ammoniac et
b) au moins un précurseur d'agent de réduction, comprenant de l'urée,
un réservoir (20) étant réalisé pour une solution aqueuse (45), comprenant au moins un précurseur d'agent de réduction, hors duquel on peut convoyer de la solution aqueuse (45) au moyen d'un moyen de transport (19) dans au moins une conduite d'alimentation (2) avec un orifice de sortie, des moyens (4) étant réalisés pour chauffer la conduite d'alimentation (2),
**caractérisé en ce qu'**avec les moyens (4) avec lesquels l'au moins une conduite d'alimentation (2) peut être chauffée à une température au dessus d'une température critique de plus de 300°C, la température critique étant plus élevée que la température d'ébullition d'eau et le dispositif (1) étant réalisé de manière telle qu'en opération la température se trouve sur la longueur de la conduite d'alimentation (2) au plus 25°Celsius au dessus et en dessous d'une température moyenne.

2. Dispositif selon la revendication 1, dans le cas duquel la conduite d'alimentation (2) a sur sa face intérieure une rugosité R_{z} de 8 à 12 micromètres.

3. Dispositif selon l'une des revendications précédentes, dans le cas duquel la conduite d'alimentation (2) est réalisée à partir d'un matériau avec un coefficient de conductibilité thermique de plus de 200 W/m K (watt par mètre et kelvin).

4. Dispositif selon l'une des revendications précédentes, dans le cas duquel la conduite d'alimentation (2) a au moins un changement de direction de 90° ou plus.

5. Dispositif selon l'une des revendications précédentes, dans le cas duquel les moyens (4) pour réchauffer au moins un des éléments suivants, comprennent:
a) un chauffage électrique par résistance;
b) des fluides colporteurs pour l'utilisation de la chaleur résiduelle d'au moins une autre pièce de construction;
c) au moins un élément Peltier et
d) un moyen pour la combustion d'un carburant.

6. Dispositif selon l'une des revendications précédentes, dans le cas duquel
- la conduite d'alimentation (2) est entourée en enroulements étroits par un conducteur chauffant (38)
ou dans le cas de laquelle
- la conduite d'alimentation (2) et un conducteur chauffant (38) sont enroulés communément en une spirale, dans quel cas il existe de préférence une liaison matériellement jointive entre conducteur chauffant et conduite d'alimentation.

7. Dispositif selon l'une des revendications précédentes, dans le cas duquel la conduite d'alimentation (2) est réalisée d'un matériau, comprenant de l'aluminium.

8. Dispositif selon l'une des revendications précédentes, dans le cas duquel la conduite d'alimentation a une capacité thermique d'au moins 150 J/K (joule par kelvin).

9. Dispositif selon l'une des revendications précédentes, dans le cas duquel la conduite d'alimentation (2) est au moins pourvue partiellement d'un revêtement catalysant l'hydrolyse d'un précurseur d'agent de réduction en un agent de réduction.

10. Dispositif selon l'une des revendications précédentes, dans le cas duquel la conduite d'alimentation (2) et un catalyseur d'hydrolyse (17) sont réalisés dans un boîtier commun pouvant être chauffé.

11. Procédé pour mettre à disposition un mélange de substances gazéiformes, comprenant au moins une des substances suivantes :
a) au moins un agent de réduction comprenant de l'ammoniac
et
b) au moins un précurseur d'agent de réduction,
comprenant de l'urée,
dans le cas duquel une solution aqueuse (45) d'au moins un précurseur d'agent de réduction est convoyée, hors d'un réservoir (20) dans une conduite d'alimentation (2), la conduite d'alimentation (2) étant chauffée,
**caractérisé en ce que**
la conduite d'alimentation (2) est chauffée de manière telle à une température au dessus d'une température critique de plus de 300°C que la solution aqueuse (45) s'évapore complètement en mélange de substances gazéiformes et en plus, la température se trouve tout au dessus ou en dessous sur une longueur de la conduite d'alimentation (2) au maximum 25 degrés Celsius au dessus ou en dessous d'une température moyenne.

12. Procédé selon la revendication 11, dans le cas duquel les températures dans la conduite d'alimentation (2) sont situées à une température moyenne entre 380°C et 450°C.

13. Procédé selon l'une des revendications 11 à 12, dans le cas duquel la conduite d'alimentation (2) a au moins un changement de direction d'au moins 90°C.

14. Procédé selon l'une des revendications 11 à 13, dans le cas duquel la conduite d'alimentation (2) est chauffée à une deuxième température qui est plus élevée que la température critique, où une évaporation complète de la solution aqueuse (45) a lieu.

15. Procédé selon l'une des revendications 11 à 14, dans le cas duquel le réchauffement de la conduite d'alimentation (2) est effectué à l'intermédiaire d'un chauffage électrique par résistance et en début du réchauffement la résistance de ce chauffage par résistance est déterminée et un réchauffement de la conduite d'alimentation (2) a lieu en fonction de la résistance déterminée.
